# EUROPEAN PATENT APPLICATION

(11) **EP 3 805 879 A1**
(43) Date of publication of application: **14.04.2021**
(21) Application number: 19810087.7
(22) Date of filing: 09.05.2019
(51) Int. Cl.: G05B 19/05, G06F 8/33, G06F 8/41

(54) **SUPPORT DEVICE AND SUPPORT PROGRAM**

(30) Priority: 31.05.2018 JP 2018104614
(71) Applicant: OMRON CORPORATION, Kyoto-shi, Kyoto 600-8530 (JP)
(72) Inventor: UNO, Kenji, Kizugawa-shi, Kyoto 619-0283 (JP)
(74) Representative: Schmidbauer, Andreas Konrad
(86) International application number: PCT/JP2019/018549
(87) International publication number: WO 2019/230321

(57) **Abstract**

The present invention supports easy development of a control program in which the data type of control data is considered. A command code generation means generates: a variable for each control datum; information that defines a data type that corresponds to the variable, the data type being at least one type from among other data types that have the same data-handling method; and a command code for which a process executed by a control device is described using the defined variable. When generating an executable program using the defining information and the command code, an executable program generation means generates a type set that comprises one or more data types defined in correspondence with each variable that has an operational expression indicated by the command code, selects one type from the type set of the operational expression based on a standard for ensuring operational precision, and determines the type as the data type of the operational result.

## Description

### BACKGROUND

### Technical Field

The present disclosure relates to a support device for supporting utilization and operations of a programmable logic controller (hereinafter also referred to as a "PLC") used for controlling a device such as a machine or equipment and a support program for implementing the support device.

### Description of Related Art

As controllers for controlling devices such as machines or equipment, PLCs are typically used. Such PLCs are highly versatile and have been widely distributed because they allow users to freely create programs in accordance with devices that are targets of control. In the PLCs in the related art, input data, output data, data for internal calculation, and the like for controlling the devices are stored at predefined positions in storage regions. In the case of using (referring to) the data in programs, it is necessary to identify (absolute or relative) addresses in the storage regions.

On the other hand, it has become possible to perform object-oriented programming in consideration of reusability or common processing (common modularization) of the programs and the like. Specifically, programming environments in which all data such as input data, output data, data for internal calculation and the like can be used (referred to) using variables have been provided. Programs generated in such programming environments are also referred to as "variable programs" in a sense of comparison with programs in the related art.

On the other hand, there has been a trend of actively employing general-purpose devices to reduce device costs of PLC main bodies. With employment of such general-purpose devices, activities of a plurality of manufacturers creating alliances and introducing common standards instead of standards unique to vendors that are production manufacturers in the related art have become common. This leads to an advantage for users that a uniform system can be constructed without depending on vendors of the devices. As an example of such common standardization, using common variables for each datum for controlling devices and the like has advanced.

In a case in which common variables for each datum for controlling devices are used, there are cases in which data types are different even for the same variables. In a case in which vendors that supply devices are different, for example, there are cases in which data types of variables differ from each other for each of the vendors even if the variables are the same. This will also be referred to as "data types supported by devices" being different in this specification.

In such a background in which "data types supported by devices" are different, it is necessary for programmers to ascertain, in advance, data types supported by individual devices in a network including a PLC in order to declare an appropriate data type or describe an appropriate data type conversion command in programming. Ascertaining such "data types supported by devices" takes time, and this may be disadvantageous for improving producibility of programs.

A support device in Japanese Patent Application Laid-Open No. 2013-161106 (Patent Literature 1) adapts a data structure of data secured on a memory to correspond to a variable in accordance with the type of a programmable logic controller in order to more easily exchange data between PLCs without depending on the type of the counterpart PLC.

In Japanese Patent Application Laid-Open No. 2010-176377 (Patent Literature 2), a data type conversion command is used to convert an application program for a PLC developed with a unique language specification into a program in accordance with the JISB3503 (IEC61131-3) language.

### [Citation List]

### [Patent Literature]

[Patent Literature 1] Japanese Patent Application Laid-Open No. 2013-161106
[Patent Literature 2] Japanese Patent Application Laid-Open No. 2010-176377

### SUMMARY

### [Technical Problem]

However, Patent Literature 1 and Patent Literature 2 do not propose improvement in efficiency of programming based on a difference in "data types supported by the devices".

An objective of the present disclosure is to provide an environment that supports easy development of a control program in which the data type of control data of a device that is a target of control is considered.

### [Solution to Problem]

A support device according to an example of the present disclosure is a support device that generates an executable program to be executed by a control device that controls a target, the support device including: data storing means for storing, for each data type for controlling the target, information regarding a plurality of data types including the data type and other data types that are able to be handled by the same data handling method as the data type by the control device when the program is executed; means for generating information that defines a variable for each datum and one or more of the plurality of data types that are data types corresponding to the variable; means for generating a command code that describes processing to be executed by the control device using the defined variable; and means for generating the executable program using the defining information and the command code.

The means for generating the executable program is configured to generate a type set including one or more data types defined to correspond to each variable included in an operational expression indicated by the command code, and select one data type from the type set of the operational expression based on a criterion for securing operational precision and determine the data type as a data type of an operational result.

According to the present disclosure, it is possible to define one or more data types that are handled using the same handling method by the control device for the variable of each datum used to describe the command code. Also, even if a plurality of data types is defined for the variable for each datum, it is possible to determine the data type of the operational expression described to include the variable as a data type for which operational precision is secured when the executable program is generated. It is thus possible to develop a program for controlling a target without depending on the data type supported by the device that is a target of control.

In the aforementioned disclosure, the plurality of data types depending on each of the data types for controlling the target are stored for each vendor of the target, and the plurality of data types of each vendor include a data type defined in advance by the vendor and other data types that are able to be handled by the same data handling method as the data type defined in advance.

According to the present disclosure, it is possible to include the data types depending on the vendor of the target in the plurality of data types.

In the aforementioned disclosure, the means for generating the defining information is configured to generate the variable for each datum and information defining the plurality of data types corresponding to the vendor of the target as the data types corresponding to the variable.

According to the present disclosure, it is possible to define the plurality of data types for each vendor of the target.

In the aforementioned disclosure, the support device receives, from the control device, information identifying a vendor of the target connected to the control device.

According to the present disclosure, the support device can receive information regarding the vendor of the target from the control device that is a real machine, for example.

In the aforementioned disclosure, the means for generating the defining information is configured to define one or more data types corresponding to the variable for each datum based on a user's operation, and cause monitor to display the variable and the plurality of data types in association with the variable.

According to the present disclosure, the user can operate an operation of selecting a data type to be defined from among the plurality of data types displayed on the monitor.

In the aforementioned disclosure, the aforementioned handling method depending on the data type includes a handling method based on how large a data size is. The support device further includes: means for storing, in correspondence with each data type, a priority indicating a degree with which the data type is set to correspond to the variable with a higher priority than the other data types based on the handled data size. The determining of the data type of the operational result includes selecting a data type with a priority in accordance with the criterion for securing the operational precision from the type set and determining the data type as the data type of the operational result.

According to the present disclosure, it is possible to avoid an information loss such as digit cancellation and digit overflow of the operational result in a case in which the arithmetic operation is performed by the control device, by determining the data type of the operational result based on the data size corresponding to the data type.

In the aforementioned disclosure, the generating of the type set includes generating, based on a type of an operator included in the operational expression, a type set including one or more data types defined to correspond to a variable included in the expression.

According to the present disclosure, it is possible to differentiate the type set to have content in accordance with the type of the operator included in the operational expression.

According to an example of the present disclosure, there is provided a support program that generates an executable program to be executed by a control device that controls a target. The support program causes a computer to function as the following means. The computer includes data storing means for storing, for each data type for controlling the target, information regarding a plurality of data types including the data type and other data types that are able to be handled by the same data handling method as the data type by the control device when the program is executed.

The following means mentioned above includes means for generating information that defines a variable for each datum and one or more of the plurality of data types that are data types corresponding to the variable; means for generating a command code that describes processing to be executed by the control device using the defined variable; and means for generating the executable program using the defining information and the command code. The means for generating the executable program is configured to generate a type set including one or more data types defined to correspond to each variable included in an operational expression indicated by the command code, and select one data type from the type set of the operational expression based on a criterion for securing operational precision and determine the selected data type as a data type of an operational result.

It is possible to define one or more data types that are handled by the same data handling method by the control device for the variable for each datum used to describe the command code by the support program according to the present disclosure being executed by the computer. Also, it is possible to determine the data type of the operational expression described to include the variable as the data type for which operational precision is secured when the executable program is generated even if the plurality of data types are defined for the variable for each datum.

### [Effects of Invention]

According to an example of the present disclosure, it is possible to provide an environment that supports easy development of a control program in which the data type of control data of a device that is a target of control is considered.

### BRIEF DESCRIPTION OF DRAWINGS

Fig. 1 is a schematic view illustrating an example of a PLC system SYS according to an embodiment of the present invention.
Fig. 2 is a schematic view illustrating an example of a hardware configuration of a processing unit 10 of a PLC according to the embodiment of the present invention.
Fig. 3 is a schematic diagram illustrating an example of a hardware configuration of a support device 200 according to the embodiment of the present invention.
Fig. 4 is a schematic view illustrating an example of a software configuration implemented in the processing unit 10 of the PLC according to the embodiment of the present invention,
Fig. 5 is a schematic view illustrating an example of a software configuration implemented in the support device 200 according to the embodiment of the present invention.
Fig. 6 is a diagram illustrating an overview of an example of a program development environment in the support device 200 according to the embodiment.
Fig. 7 is a flowchart illustrating an example of overview processing for program development according to the embodiment.
Fig. 8 is a diagram illustrating an example of a source program 271 according to the embodiment.
Fig. 9 is a diagram schematically illustrating an example of editor information 277 according to the embodiment.
Fig. 10 is a diagram illustrating an example of data-type correspondence information 294 for each vendor of the device according to the embodiment.
Fig. 11 is a diagram for explaining an example of a principle of equating data types according to the embodiment.
Fig. 12 is a diagram illustrating an example of a screen on which a program according to the embodiment is displayed.
Fig. 13 is a processing flowchart illustrating an overview of an example of collective setting processing according to the embodiment.
Fig. 14 is a flowchart illustrating an example of variable processing according to the embodiment.
Fig. 15 is a processing flowchart illustrating an example of individual setting processing according to the embodiment.
Fig. 16 is a diagram illustrating an example of display of data type candidates in the individual setting processing according to the embodiment.
Fig. 17 is a flowchart illustrating an example of compiling processing according to the embodiment.
Fig. 18 is a flowchart illustrating an example of the compiling processing according to the embodiment.
Fig. 19 is a diagram illustrating an example of AST corresponding to an expression according to the embodiment.
Fig. 20 is a diagram illustrating an example of a change in AST in code analysis processing according to the embodiment.
Fig. 21 is a diagram illustrating an example of a change in AST in the code analysis processing according to the embodiment.
Fig. 22 is a diagram illustrating an example of a change in AST in the code analysis processing according to the embodiment.
Fig. 23 is a diagram illustrating an example of a change in AST in the code analysis processing according to the embodiment.
Fig. 24 is a diagram illustrating an example of a change in AST in the code analysis processing according to the embodiment.
Fig. 25 is a diagram illustrating an example of a function applied to the code analysis processing according to the embodiment.
Fig. 26 is a diagram illustrating an example of a function applied to the code analysis processing according to the embodiment.
Fig. 27 is a diagram illustrating an example of a function applied to the code analysis processing according to the embodiment.
Fig. 28 is a diagram illustrating an example of a rank table according to the embodiment.
Fig. 29 is a diagram illustrating an example of a function applied to the code analysis processing according to the embodiment.

### DESCRIPTION OF EMBODIMENTS

An embodiment of the present invention will be described in detail with reference to the drawings. Note that the same reference signs will be applied to the same or corresponding portions in the drawings, and description thereof will not be repeated.

### <A. Application Example>

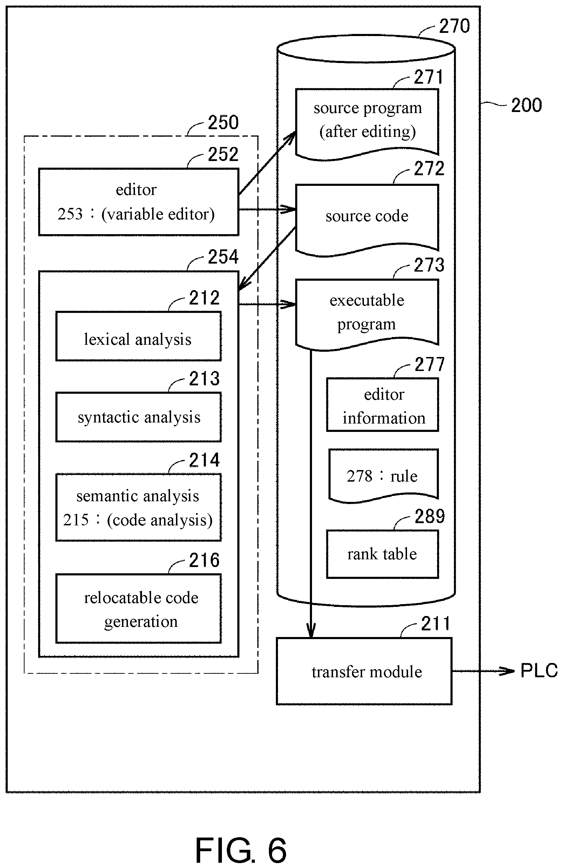

First, an example of a situation in which the present invention is applied will be described with reference to Fig. 6. Fig. 6 is a diagram schematically illustrating an example of a program development environment in a support device 200 according to the embodiment. In the embodiment, the support device 200 that supports development of an executable program to be executed by a control device that controls a control target is provided. The executable program can include a control program for controlling a control target, for example. The control device can include, for example, a programmable logic controller. The control target corresponds to a device such as an actuator or a detection sensor controlled by the control device.

The support device 200 includes a programming application 250 as an environment for supporting development of a user program such as a control program, that is, an executable program. The support device 200 includes an editor 252 that edits and generates a source program 271 and a compiler 254 that compiles the edited source program 271 to convert the source program 271 into an executable program 273. Also, the support device 200 includes a data storage section 270 configured of a random access memory (RAM), a hard disc drive (HDD), and the like that are a region for storing data to be used when the source program 271 is edited or compiled and an operation region.

The data storage section 270 includes editor information 277. The editor information 277 has, for each data type for controlling a target, information regarding a plurality of data types including the data type and other data types that are able to be handled by the same data handling method as the data type by the control device when the program is executed. The data handling method includes the data size defined depending on the data type or alignment of data in the memory. The target corresponds to various devices such as an actuator and a detection sensor.

The editor 252 edits the source program 271 in accordance with a user's operation. When the source program 271 is edited, the editor 252 generates the corresponding source code 272. The source program 271 includes a program described in accordance with a predefined program language (for example, the international standard IEC61131-3). Note that the type of the program language is not limited to the language in accordance with the international standard IEC61131-3.

The source program includes a variable declaration section that is described using a variable editor 253 and a code section that is described using the editor 252. The variable editor 253 corresponds to means for generating information defining a variable for each datum and one or more of the aforementioned plurality of data types that are data types corresponding to the variable, in the variable declaration section. The editor 252 corresponds to means for generating a command code that describes processing to be executed by the control device using the defined variable, in the code section. More specifically, the editor 252 generates a command code representing an operational expression in accordance with a user's operation received via a keyboard or the like. The operational expression includes a logical operation or an arithmetic operation, and the operational expression includes an operator and an operand. Further the operator includes a unary operator, a binary operator, or the like.

The compiler 254 generates an executable program 273 using such definition information of the variable declaration section and the command code of the code section. Specifically, the compiler 254 generates the executable program 273 configured of a code that can be executed by a processor of the control device from the source program 271 by compiling the source program 271 (more specifically, the source code 272) including the definition information of the variable declaration section and the command code of the code section in accordance with a predefined program language specification.

The executable program 273 is transferred (downloaded or uploaded) to the control device such as a PLC by a transfer module 211. The processor of the control device controls various devices that are control targets by executing the executable program 273.

The compiler 254 corresponds to means for generating the executable program. The compiler 254 includes a lexical analysis section 212, a syntactic analysis section 213, a semantic analysis section 214, and a code analysis section 215 for scanning and analyzing the source program 271. Further, the compiler 254 includes a relocatable code generation section 216 that generates a relocatable code from the source program 271 based on the analysis result of the source program 271.

The code analysis section 215 has means for generating a type set including one or more data types defined by the variable declaration section to correspond to the variable included in the operational expression indicated by the command code included in the code section of the source program 271. Specifically, the code analysis section 215 generates a type set including one or more data types defined by the variable declaration section to correspond to the variable included in the aforementioned operational expression in accordance with rules 278 of the data storage section 270. The rules 278 include a function for generating the aforementioned type set including the one or more data types defined to correspond to the variable included in the expression based on the type of the operator included in the operational expression. The type set can be a type set including data types that the operator of the operational expression can employ based on such rules 278.

Also, the code analysis section 215 has means for selecting one data type from the type set of the operational expression based on a criterion for securing operational precision and determining the data type as a data type of the operational result.

Here, the data handling method depending on the data type can include a handling method based on how large the data size is. The support device 200 has a rank table 289 that stores, in correspondence with each data type, a priority indicating a degree with which the data type is set to correspond to the variable with a higher priority than other data types based on the handled data size, in the data storage section 270. In a case in which the data type of the operational result is determined, the code analysis section 215 selects the data type with a priority that follows the criterion for securing the operational precision from the aforementioned type set and determines the data type as the data type of the operational result, that is, the data type of the operational expression.

According to the support device 200 in the embodiment, the editor 252 generates the source program 271 from the command code that describes, using a defined variable, the variable for each datum for controlling a target, the information defining one or more data types that are data types corresponding to the variable and are handled by the same data handling method by the control device, and the processing to be executed by the control device. It is thus possible to define the one or more data types that are handled by the same data handling method by the control device for the variable for each datum used to describe the command code.

In this manner, even in a case in which data types of control data of target devices differ from each other depending on vendors that supply the devices, that is, in a case in which "data types supported by the devices" differ from each other, the source program 271 can handle such a difference in data types by defining the plurality of data types for the variable for each datum.

Also, the code analysis section 215 can determine the data type of the operational result from the type set of the data types corresponding to the variable of the operational expression such that operational precision is secured for the operational expression indicated by the command code as described above. In this manner, it is possible to determine the data type of each operational expression described in the source program 271 as the data type for which operational precision is secured when the executable program 273 is generated even if a plurality of data types is defined for the variable for each datum.

In this manner, the operation in accordance with the operational expression indicated by the command code is performed in accordance with the data type, which is determined for the operational expression, for which operational precision is secured, when the program is executed by the control device. Thus, it is possible to avoid occurrence of an information loss such as digit cancellation or digit overflow in the operational result acquired when the program is executed. This means that the control device can appropriately control the target that is a device using the control data based on the operational result even if there is a difference in "data types supported by the devices."

The "program" in this specification corresponds to a variable program and can typically include a sequence program. The sequence program includes a program configured of one or more commands described in accordance with the international standard IEC61131-3 defined by the International Electrotechnical Commission (IEC), for example. The sequence program can include various commands including a sequence command and/or a motion command. Note that the sequence program may include not only the command described in accordance with the international standard IEC61131-3 but also a command uniquely defined by a production manufacture, a vendor, or the like of the programmable controller (PLC).

In this specification, the concept indicated by "user" includes a programmer who creates a program.

In this specification, "sequence command" is basically a term including one or more commands described by one or more logical circuits that calculate parameters such as an input value, an output value, and an internal value for controlling the device. In this specification, "motion command" is a term including one or more commands for calculating, as an order, parameters for controlling the device such as a servo motor or an actuator, such as a position, a speed, an acceleration, a jerk, an angle, an angular seed, an angular acceleration, and an angular jerk for the device. Such a command can include a logical operation command and an arithmetic operation command.

In this specification, the aforementioned parameters for controlling the device correspond to control data for controlling the device. In this specification, the control data can include a position, a speed, an acceleration, a jerk, an angle, an angular speed, an angular acceleration, an angular jerk, and the like. In the variable program, a variable is allocated to each control datum, and command codes for calculation commands such as the logical operation command and the arithmetic operation command described above are described using operators and variables.

In this specification, "data handling method" indicates a data processing method for the PLC to appropriately process (including an arithmetic operation, access (reading or writing) to the memory), and the like) data in accordance with a predefined programming language specification. Specifically, the "data handling method" is based on a criterion such as a data size of the control data, alignment such as adjustment of the position on the memory in a case in which the memory is accessed, or a data format (double precision, single precision, a fixed point, a floating point, and the like), for example. Note that the criterion of the "data handling method" is not limited to the data size, the alignment, and the data format. In this specification, such a memory can include a physical memory or a logical memory (virtual memory).

In this specification, "data types that can be equated" indicates a viewpoint of whether or not "data handling methods" performed by the PLC are the same. For example, in a case in which control data can appropriately be processed (including an arithmetic operation, access (reading or writing) to the memory) using a different type while securing operational precision and the like even in a case in which the control data with a certain data type is changed to the different data type, it is possible to state that both data types are "data types that can be equated." More specifically, even in a case in which a data type that certain control data of a device provided by one vendor has is changed to another data type, both data types are "data types that can be equated" as long as the PLC can appropriately process (including an arithmetic operation or access (reading or writing) to the memory) the certain control data using another data type.

Hereinafter, a more detailed configuration and processing of the support device 200 according to the embodiment will be described as a more specific application example of the present invention.

### <B. System Configuration>

First, a system including PLCs, utilization and operations of which are supported by the support device according to the embodiment will be described.

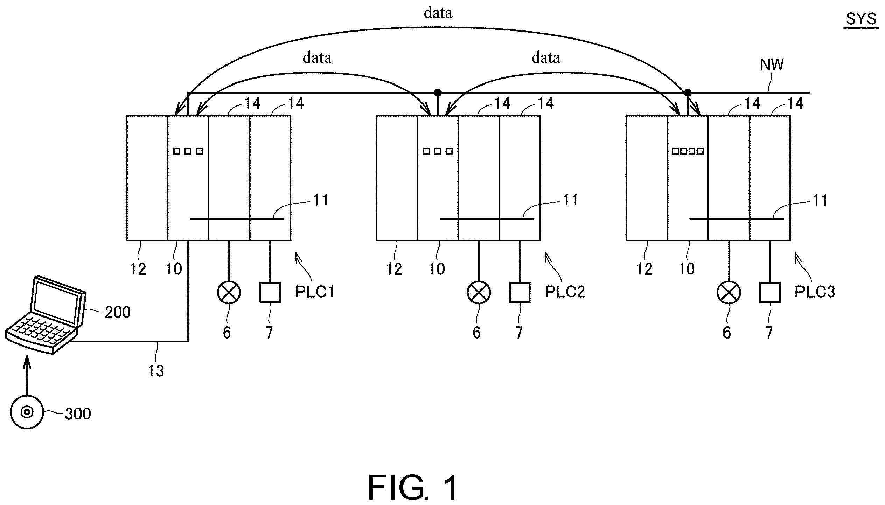

Fig. 1 is a schematic diagram illustrating a PLC system SYS according to the embodiment of the present invention. The PLC system SYS according to the embodiment includes a plurality of PLCs (a PLC 1, a PLC 2, and a PLC 3) network-connected via a network NW. The types of these PLCs are the same as or different from each other. There are cases in which data is exchanged between the PLC 1 and the PLC 2, between the PLC 2 and the PLC 3, and between the PLC 3 and the PLC 1 via the network NW.

Each PLC includes a processing unit 10 that is a subject that executes a program, a power source unit 12 that supplies electric power to the processing unit 10 and the like, and an input/output (IO) unit 14 that exchanges signals from a field. The IO unit 14 is connected to the processing unit 10 via a system bus 11. Typically, the IO unit 14 acquires an input signal from a detection sensor 6 that is a field device and drives an actuator 7 that is a field device in accordance with a program execution result of the processing unit 10. The detection sensor 6 detects, for example, a control amount of the actuator. The detection sensor 6 and the actuator 7 are examples of the devices that may be "targets" controlled by the PLC, and the types of devices are not limited to the detection sensor 6 and the actuator 7.

The support device 200 is connected to the processing unit 10 of the PLC via a cable 13. The support device 200 may be connected to the processing unit 10 in a wireless manner. The support device 200 has a function of generating a program to be executed by the PLC (hereinafter also referred to as an "executable program") and a function of monitoring an operating state of the PLC that is a connection destination, values of various kinds of data, and the like. Further, the support device 200 may have an editor function, a compiling function, a debug function, a simulation function, and the like to support the user in generating the executable program. The compiling function may be provided as a builder function.

### <C. Hardware Configuration>

Next, hardware configurations of each PLC configuring the PLC system SYS and the support device 200 illustrated in Fig. 1 will be described.

### (c1: Hardware Configuration of PLC)

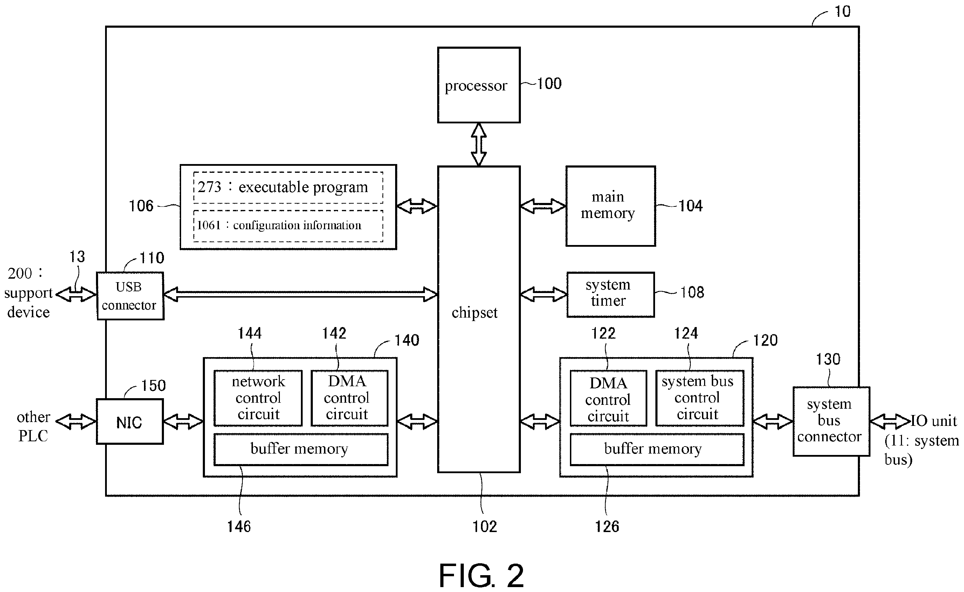

Fig. 2 is a schematic view illustrating a hardware configuration of the processing unit 10 in each PLC according to the embodiment of the present invention. Referring to Fig. 2, the processing unit 10 includes a processor 100, a chipset 102, a main memory 104, a nonvolatile memory 106, a system timer 108, a system bus controller 120, a network controller 140, a universal serial bus (USB) connector 110, and a network interface card (NIC) 150. The chipset 102 and the other components are coupled to each other via various buses.

The processor 100 and the chipset 102 are typically configured in accordance with a general-purpose computer architecture. In other words, the processor 100 interprets and executes command codes that are sequentially supplied from the chipset 102 in accordance with an inner clock. The chipset 102 exchanges internal data with various components connected thereto and generates command codes necessary for the processor 100. Further, the chipset 102 has a function of caching data and the like obtained as a result of arithmetic processing executed by the processor 100.

The processing unit 10 has a main memory 104 and a nonvolatile memory 106 as memories.

The main memory 104 is a volatile storage region and stores various programs to be executed by the processor 100 when a power is supplied to the processing unit 10. The main memory 104 is also used as a working memory when the various programs are executed by the processor 100. As such a main memory 104, a device such as a dynamic random access memory (DRAM) or a static random access memory (SRAM) is used.

The nonvolatile memory 106 stores, in a nonvolatile manner, a real time operating system (OS), a system program, various programs (modules) such as an executable program 273, which will be described later, and data such as system setting parameters and configuration information 1061. The configuration information 1061 includes a variable, a data type, and the like of each datum (hereinafter referred to as control datum) used to control the devices connected to the PLC for each of the device.

These programs or data are copied in the main memory 104 such that the processor 100 can access the programs or data as needed.

The processing unit 10 has a system bus controller 120 and a network controller 140 as communication interfaces. These communication interfaces perform transmission of output data and reception of input data.

The system bus controller 120 controls data exchange via the system bus 11. More specifically, the system bus controller 120 includes a direct memory access (DMA) control circuit 122, a system bus control circuit 124, and a buffer memory 126. The system bus controller 120 is internally connected to the system bus 11 via a system bus connector 130.

The network controller 140 includes a direct memory access (DMA) control circuit 142, a network control circuit 144, and a buffer memory 146 to control data exchange with other PLCs via the network NW and the NIC 150.

The network control circuit 144 performs processing of transmitting output data in the buffer memory 146 and processing of receiving input data and storing the input data in the buffer memory 146 with the other PLCs connected to the network NW.

The USB connector 110 is a communication interface to connect the support device 200 to the processing unit 10. Typically, the programs and the like that can be executed by the processor 100 of the processing unit 10 transferred from the support device 200 are taken in the PLC via the USB connector 110.

### (c2: Hardware Configuration of Support Device)

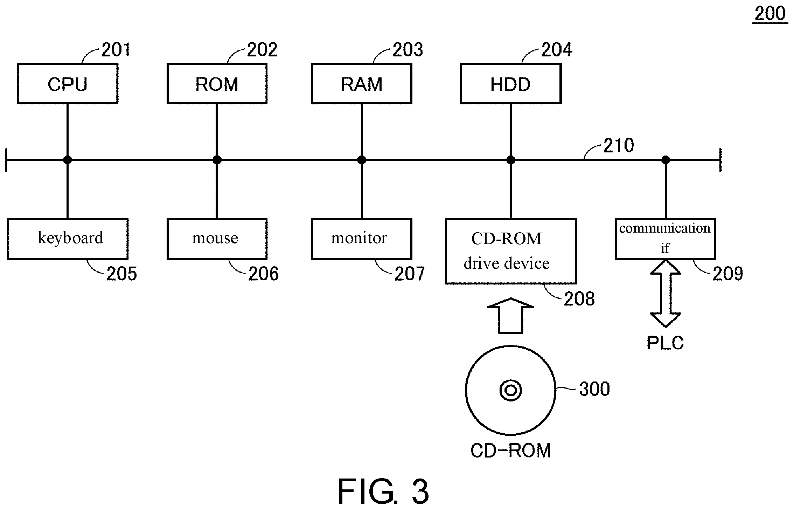

Fig. 3 is a schematic diagram illustrating an example of a hardware configuration of the support device 200 according to the embodiment of the present invention. Referring to Fig. 3, the support device 200 is typically configured of a general-purpose computer. Note that the support device 200 may be a laptop personal computer with excellent portability from a viewpoint of maintenance properties.

Referring to Fig. 3, the support device 200 includes a CPU 201 that executes various programs including an OS, a read only memory (ROM) 202 that stores a BIOS or various kinds of data, a memory RAM 203 that provides a working region for storing data needed by the CPU 201 to execute programs, and a hard disk drive (HDD) 204 that stores, in a nonvolatile manner, the programs and the like that are executed by the CPU 201.

The support device 200 further includes a keyboard 205 and a mouse 206 corresponding to an operation section that receives operations from the user and a monitor 207 for displaying information for the user. The support device 200 includes a communication interface (IF) 209 for communicating with the PLC (processing unit 10) or the like. These components exchange data with each other via an internal bus 210.

As will be described later, the various programs executed by the support device 200 are stored and distributed in a CD-ROM 300. The programs stored in the CD-ROM 300 are read by a compact disk-read only memory (CD-ROM) drive device 208 and are then stored in a hard disk drive (HDD) 204 and the like. Alternatively, a configuration in which the programs are downloaded from a higher host computer or the like through the network may be employed.

### <D. Software Configuration>

### (d1: Software Configuration of PLC)

Next, a software configuration for the PLC (processing unit 10) to provide various functions will be described.

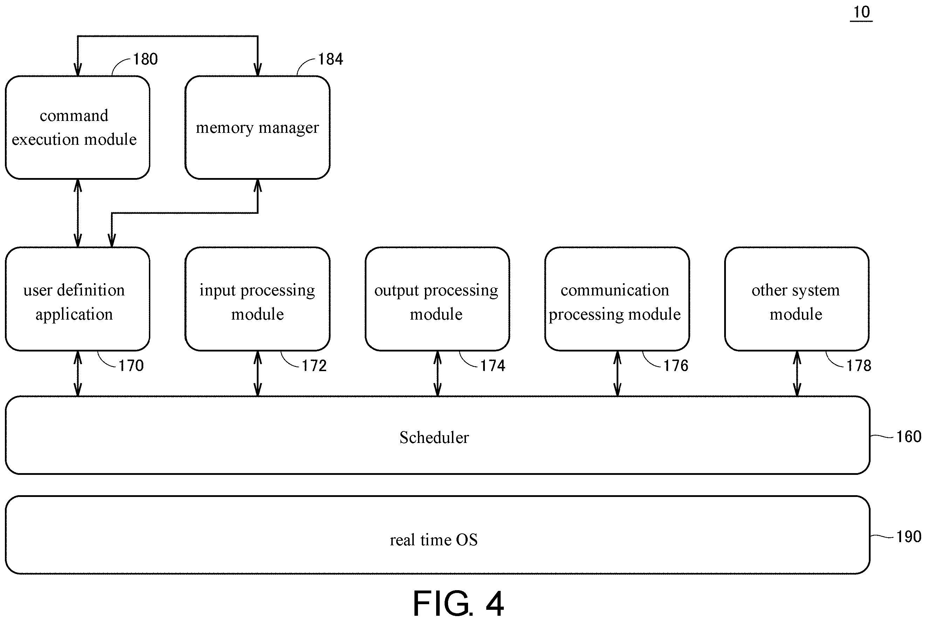

Fig. 4 is a schematic diagram illustrating an example of a software configuration implemented in the processing unit 10 of the PLC according to the embodiment of the present invention. Command codes included in the software illustrated in Fig. 4 are read at appropriate timings, are provided to the processor 100 of the processing unit 10, and are executed by the processor 100.

Referring to Fig. 4, programs necessary for the processing performed by the PLC on the real time OS 190 are implemented in the processing unit 10.

The real time OS 190 is designed in accordance with a computer architecture of the processing unit 10 and provides a basic execution environment for the processor 100 to execute programs necessary to perform processing in the PLC. More specifically, the real time OS 190 provides an environment to switch and execute a plurality of programs with elapse of time. If interruption of starting a control cycle occurs, the real time OS 190 switches an execution target of the processor 100 from a program that is being executed at a timing at which the interruption occurs to a scheduler 160.

The executable program according to the embodiment basically assumes a user definition application 170. The user definition application 170 is generated by the support device 200 and is transferred from the support device 200 to the processing unit 10. Note that a form (symbolic link) in which a part of modules (alternatively a library) necessary to execute the user definition application 170 are stored in advance in the processing unit 10 and these are called and used at appropriate timings may be employed. In this case, the support device 200 generates the executable program that does not include a part of modules. Alternatively, the executable program may be obtained by including the user definition application 170 and the command execution module 180.

More specifically, the scheduler 160, the user definition application 170, a user definition application 170, an input processing module 172, an output processing module 174, a communication processing module 176, an other-system module 178, a command execution module 180, and a memory manager 184 are implemented in the processing unit 10.

The scheduler 160 controls execution start timings and processing interruption of the user definition application 170, the input processing module 172, the output processing module 174, and the communication processing module 176.

The user definition application 170 is created by the user in accordance with a purpose of control. In other words, the user definition application 170 is a program arbitrarily designed in accordance with a target line (process) or the like to be controlled using the PLC system SYS. The user definition application 170 can include the executable program 273 generated by the support device 200.

The user definition application 170 can include special processing such as sequence processing and a motion arithmetic operation. The user definition application 170 realizes processing included in the user definition application 170 in corporation with the command execution module 180.

The command execution module 180 is called when some sequence command or some function command defined by the user definition application 170 is executed.

The input processing module 172 rearranges input data received by the system bus controller 120 in a form suitable to be used by the user definition application 170. The output processing module 174 rearranges output data generated through execution of the user definition application 170 in a form suitable to be transferred to the system bus controller 120.

The communication processing module 176 controls communication processing with another PLC using the network controller 140 or communication with the support device 200.

The other-system module 178 collectively indicates one or more modules for realizing various functions of the PLC 1 other than the programs individually illustrated in Fig. 4.

The memory manager 184 manages data stored in the main memory 104.

### (d2: Software Configuration of Support Device)

Next, a software configuration for the support device 200 to provide various functions will be described.

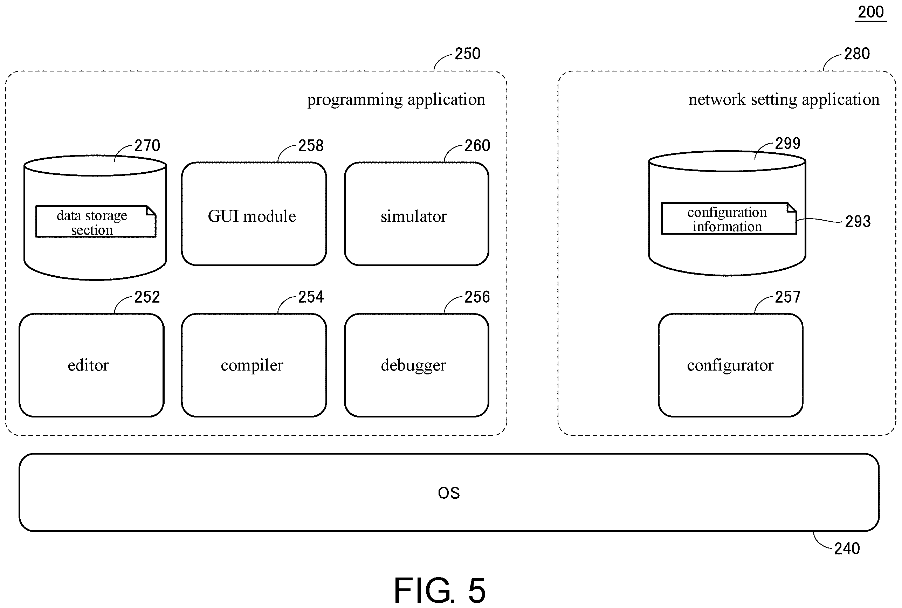

Fig. 5 is a schematic diagram illustrating an example of a software configuration that is implemented in the support device 200 according to the embodiment of the present invention. Command codes included in the software illustrated in Fig. 5 are read and executed by the CPU 201.

Referring to Fig. 5, an OS 240, a programming application 250, and a network setting application 280 are implemented in the support device 200. An environment in which the programming application 250 and the network setting application 280 can be executed is provided by the OS 240 being executed in the support device 200. The support program for realizing the support device 200 according to the embodiment includes at least the programming application 250.

The programming application 250 includes an editor 252 that has a variable editor 253, a compiler 254, a debugger 256, a graphical user interface (GUI) module 258, a simulator 260, and a data storage section 270. Each of the modules included in the programming application 250 is typically distributed in a state in which it is stored in the CD-ROM 300 and is installed in the support device 200. The data storage section 270 is configured to include the ROM 202, the RAM 203, the HDD 204, or the like.

The editor 252 provides inputting and editing functions for creating a source program in accordance with a predefined program language specification. More specifically, the editor 252 provides a function of saving the created source program 271 in addition to a function of receiving content of operations performed by the user using the keyboard 205 and the mouse 206 and editing (creating) the source program 271 in accordance with the content of received operations. The editor 252 causes the monitor 207 to display information for supporting an editing operation via the GUI module 258 when the editor 252 edits the source program.

The compiler 254 provides a function of compiling the source program 271 in accordance with a predefined program language specification and generating an executable program in a (object) format in which the processor 100 of the processing unit 10 can execute the executable program.

The debugger 256 provides a function for debugging the executable program (source program). Content of the debugging include an operation of partially executing a range of the source program designated by the user and an operation of tracking a temporal change in variable value in execution of the source program. The debugger 256 causes the monitor 207 to display information for supporting the debugging using the GUI module 258.

The simulator 260 constructs an environment in which execution of a program performed by the processing unit 10 of the PLC is simulated in the support device 200.

The data storage section 270 stores various kinds of information to be used (read or written) by each component of the programming application 250. Content stored in the data storage section 270 will be described later.

The network setting application 280 includes a configurator 257 and a data storage section 299. Modules included in the network setting application 280 are typically distributed in a state in which the modules are stored in the CD-ROM 300 and are installed in the support device 200.

The configurator 257 acquires network information 293 indicating the network configuration of the PLC system SYS and stores the acquired network information 293 in the data storage section 299. The network information 293 includes configuration information received (downloaded) from each PLC connected to the network NW. Note that the configuration information included in the network information 293 includes configuration information 1061 received from a PLC that is an actual device or logical (virtual) information that is not information of an actual device. The logical information can include information input by the user via the editor 252 through an operation of the keyboard 205 or the mouse 206.

### (d3. Program Development Environment)

Referring to Fig. 6 again, a program development environment in the support device 200 will be described. In FIG. 6, the editor 252 and the compiler 254 in the programming application 250 are illustrated and illustration of the other components therein are omitted for explanation. Also, the data storage section 270 and the transfer module 211 are illustrated in association with the editor 252 and the compiler 254 in Fig. 6. In Fig. 6, the editor information 277 required by the source program 271 for reference at the time of editing a program, the source code 272, the executable program 273, and the editor 252 in relation to the editor 252 and the compiler 254 and referred to when a program is edited, a rank table 289, which will be described later, and various rules 278 that follow the predefined program language specification in the data in the data storage section 270 are illustrated. Details of the editor information 277 will be described later. The rules 278 include various rules including a predefined program language description specification for describing a program for controlling the device and the like. The transfer module 211 controls the communication IF 209 to transfer (download or upload) the executable program 273 to the PLC.

Referring to Fig. 6, the editor 252 edits the described source program 271 in accordance with content of user's operation received via the keyboard 205 or the mouse 206 and converts the source program 271 into a source code 272 in the predefined program language. The editor 252 stores the source program 271 and the source code 272 after the edition in the data storage section 270.

The compiler 254 includes a compiler for the predefined program language. Specifically, the compiler 254 includes the lexical analysis section 212, the syntactic analysis section 213, the semantic analysis section 214, the code analysis section 215, and the relocatable code generation section 216. These compile the source program 271 (more specifically, the source code 272) and generates the executable program 273 configured of a code that can be executed by the PLC in accordance with the rules 278 or the rank table 289.

The support device 200 transfers the executable program 273 to the PLC using the transfer module 211. In the PLC, data exchange between PLCs and control of the device that is a target of control are performed by the processor 100 executing the executable program 273.

### <E. Processing of Program Development>

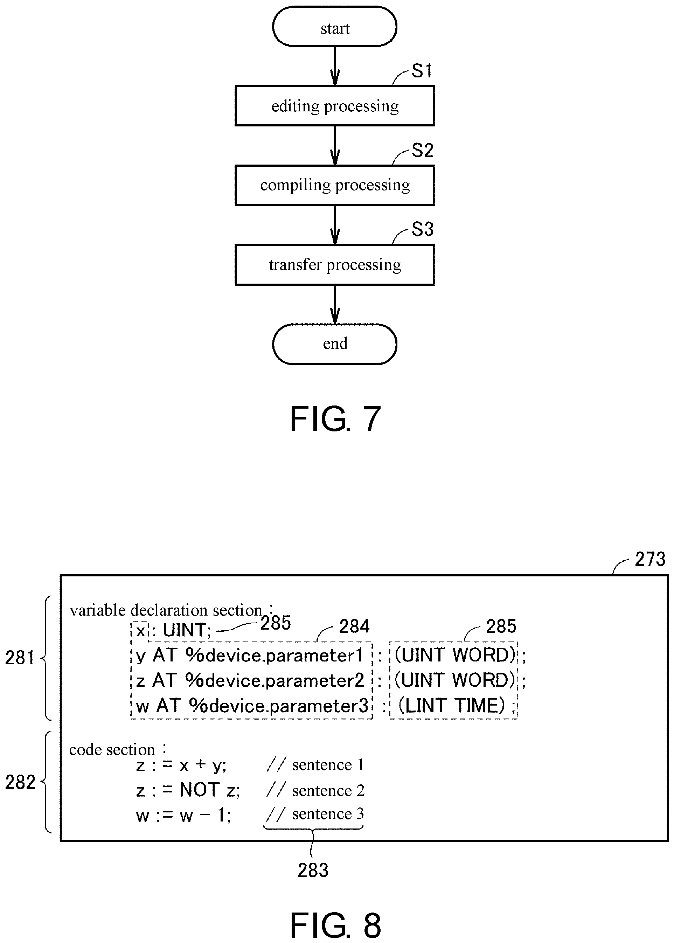

Fig. 7 is a flowchart illustrating an example of overview processing for program development according to the embodiment. Referring to Fig. 7, the editor 252 is activated first in the support device 200 in a case in which the source program 271 is generated (changed). The editor 252 performs the processing of editing the source program 271 (Step S1). Specifically, the editor 252 edits the source program 271, displays the edited source program 271 on the monitor 207, and generates a source code 272 corresponding to the source program 271 in accordance with content of a user's operation received via the keyboard 205 or the mouse 206 (Step S1).

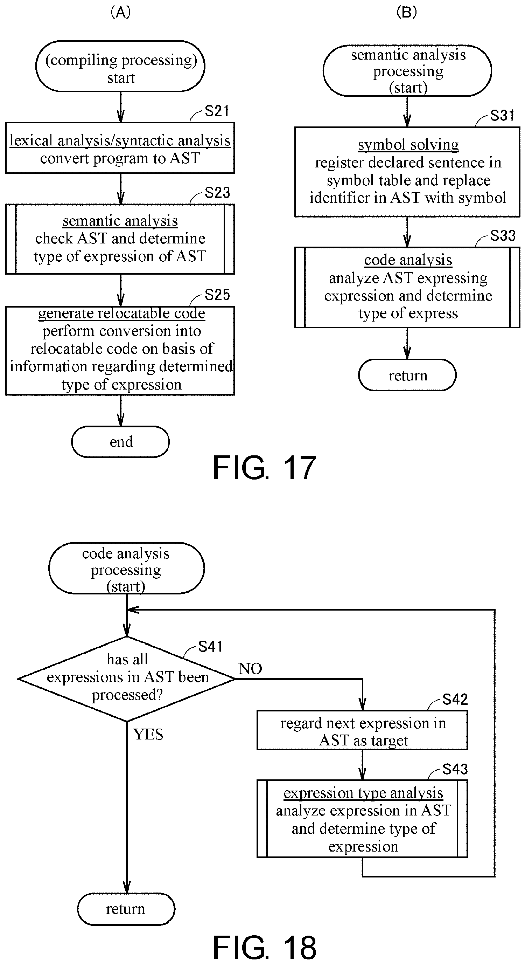

In a case in which the source program 271 is compiled, the support device 200 activates the compiler 254. The compiler 254 compiles the source program 271 (more specifically, the source code 272) to generate the executable program 273 (Step S2). The compiling processing will be described later in Fig. 17.

In a case in which the executable program 273 is transferred to the PLC, the transfer module 211 controls the communication IF 209 such that the executable program 273 is transferred to the PLC (Step S3).

### (e1. Illustration of Source Program)

Fig. 8 is a diagram illustrating an example of the source program 271 according to the embodiment. Referring to Fig. 8, the source program 271 includes a variable declaration section 281 and a code section 282. The code section 282 includes one or more command codes including a command for controlling the device and the like and the comment section 283. The code section 282 includes, for example, a command code for controlling the device. The command code includes codes of one or more operational expressions (logical operational expressions or arithmetic operational expressions) described using variables of the control datum. The comment section 283 includes information that is content of description excluded from the target of compiling and that is used for debugging, for example. Here, a "sentence 1" to a "sentence 3" for indicating sentences of a plurality of operational expressions are described in the comment section 283.

A variable 284 (more specifically, an identifier such as a variable name) described in the code section 282 and the data type 285 of the control data to which the variable is allocated in association with each variable are described in the variable declaration section 281.

### (e2. Editor Information)

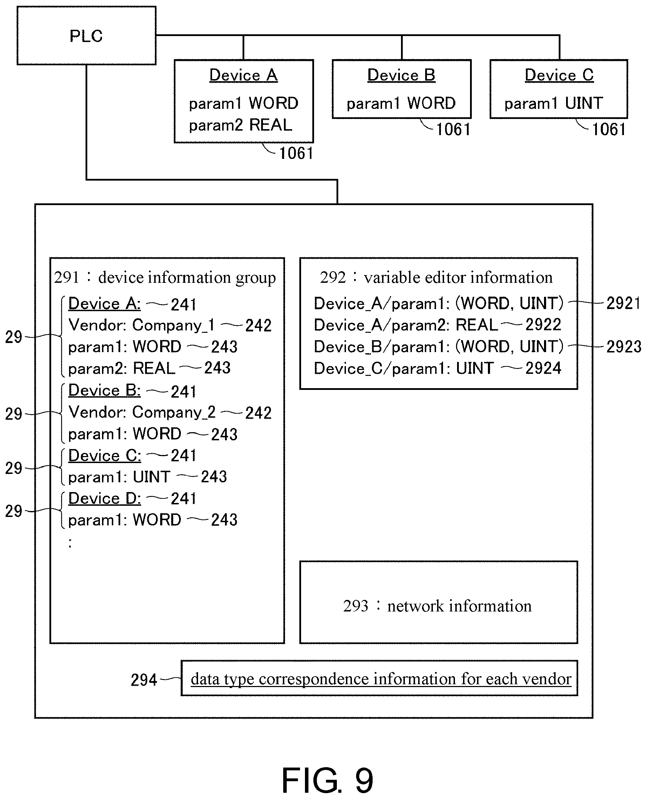

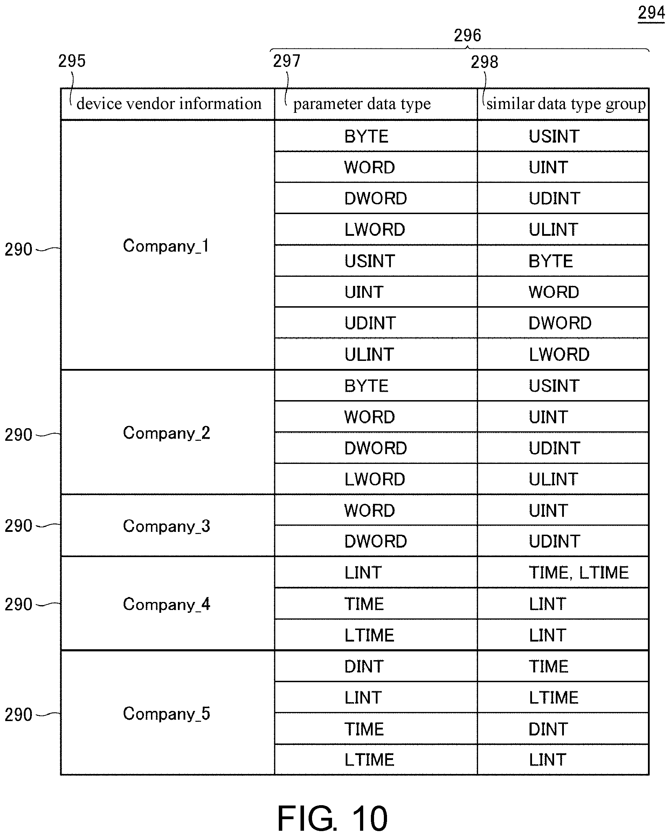

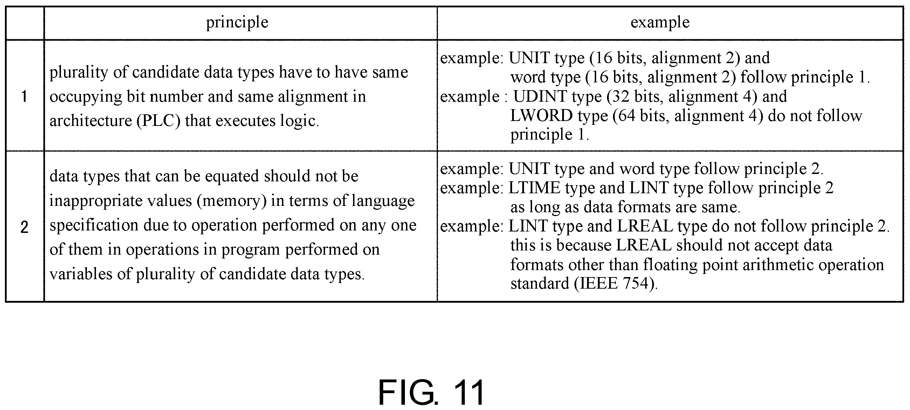

Fig. 9 is a diagram schematically illustrating an example of the editor information 277 according to the embodiment. Fig. 10 is a diagram illustrating an example of the data type correspondence information 294 for each vendor of the device according to the embodiment. Fig. 11 is a diagram for explaining an example of a rule of equating data types according to the embodiment. Fig. 9 illustrates the editor information 277 stored in the data storage section 270 of the support device 200 in association with the configuration information 1061 included in the PLC. In Fig. 9, the configuration information 1061 includes a variable of each control datum of the device and the type of the control data in an associated manner to correspond to each device connected to the PLC. Note that, although the set of a variable and a data type of each control datum is illustrated herein as the configuration information 1061 for each device, the type of the configuration information 1061 is not limited thereto.

Referring to Fig. 9, the editor information 277 includes, for example, a device information group 291, variable editor information 292, network information 293, and data type correspondence information 294 of each vendor (hereinafter also referred to as correspondence information). The device information group 291 includes device information 29 for each device that can be connected to the PLC system SYS.

The device information 29 includes a device identifier 241 such as a name of the device, a vendor identifier 242 such as a name of the vendor of the device, and parameter data 243 corresponding to each parameter of the device. The parameter data 243 includes parameter names (param1, param2, ...) and data types of the parameters. Note that the information included in the device information 29 is not limited thereto. The device information 29 may not include the vendor identifier 242. The device information group 291 is so-called static information that does not change when the source program 271 is edited.

The variable editor information 292 is so-called dynamic information that is dynamically generated by the variable editor 253 at the time of editing. The network information 293 is information indicating content that is similar to the configuration information 1061. The network information 293 includes, for example, the configuration information 1061 received by the support device 200 from the PLC that is an actual device or configuration information based on content of a user's operation received from the keyboard 205 or the mouse 206.

The correspondence information 294 is information provided from each vendor, for example. Referring to Fig. 10, the correspondence information 294 includes a record 290 for each vendor. The record 290 of each vendor includes vendor information 295 for identifying the vendor and a data type group 296 designated by the vendor as data types that can be equated. The data type group 296 that can be equated includes data types 297 that parameters (control data) of the device that the vendor provides has and a similar data type group 298 configured of similar data types corresponding to each of the data types 297. The similar data type group 298 includes one or more other data types that can be equated with the corresponding data types 297.

The data types of the data type group 296 that can be equated satisfy two conditions, namely the principles (1) and (2) illustrated in Fig. 11, for example, at the same time in the embodiment. Fig. 11 illustrates, as an example, data types that satisfy the principles in association with each of the principles (1) and (2). Specifically, the principle (1) indicates that "the data types that can be equated have to have the same data size (occupying bit number) and the same alignment in the architecture (PLC) that executes a command (logic)".

The data type group 296 that can be equated that satisfies the condition of the principle (1) includes, for example, a UINT type (16 bits, alignment 2) and a WORD type (16 bits, alignment 2). In this case, a UDINT type (32 bits, alignment 4) and a LWORD type (64 bits, alignment 4) cannot be data types that can be equated between the UINT type (16 bits, alignment 2) and the WORD type (16 bits, alignment 2) (that is, the principle (1) is not satisfied) and are not included in the data type group 296 that can be equated.

Also, the principle (2) indicates that "the data types that can be equated should not be inappropriate values (memory) in terms of the predefined program language specification due to an operation performed on any one of them in operations in the program performed on the corresponding variable".

The data type group 296 that can be equated that satisfies the condition of the principle (2) includes, for example, a UINT type and a WORD type. Also, both an LTIME type and a LINT type, for example, are included in the data type group 296 that can be equated that satisfies the condition of the principle (2) as long as the data formats thereof are the same. For example, the LINT type and an LREAL type do not satisfy the condition of the principle (2). In other words, this is because it is not possible to apply a data format including a floating point arithmetic operation standard (the Institute of Electrical and Electronics Engineers (IEEE) 754) to the LINT type and it is not possible to apply a data format other than the floating point arithmetic operation standard to the LREAL type.

Although Fig. 11 illustrates, as examples, the two types of principles (1) and (2) as principles that the data types that can be equated have to satisfy, the types of principles are not limited thereto. Also, although the UINT type, the WORD type, the UDINT type, the LWORD type, the LTIME type, the LINT type, the LREAL type, and the like have been illustrated as examples of data types that satisfy these principles, the data types are not limited thereto.

### <F. Editing Processing>

In the embodiment, editing of the variable declaration section 281 will mainly be described as editing processing for editing the source program 271. In the editing of the code section 282, the editor 252 describes a command code based on a user's operation using the keyboard 205. Since it is possible to use an editing method in the related art for the editing of the code section 282, description will not be repeated here.

In the embodiment, the editor 252 activates the variable editor 253 in a case in which the variable declaration section 281 is edited. The variable editor 253 sets candidates of the data type 285 for each variable in the variable declaration section 281 based on the principles illustrated in Fig. 11. In the embodiment, the variable editor 253 performs collective setting processing or individual setting processing in order to set variables 284 and the candidates of the data type 285. In the collective setting processing, the variable editor 253 sets the variables 284 and the data type 285 for all parameters (control data) of the device, for each device indicated by the network information 293. Also, in the individual setting processing, the variable editor 253 sets the variables 284 and the data type 285 for all the parameters (control data) of the device designated by the user.

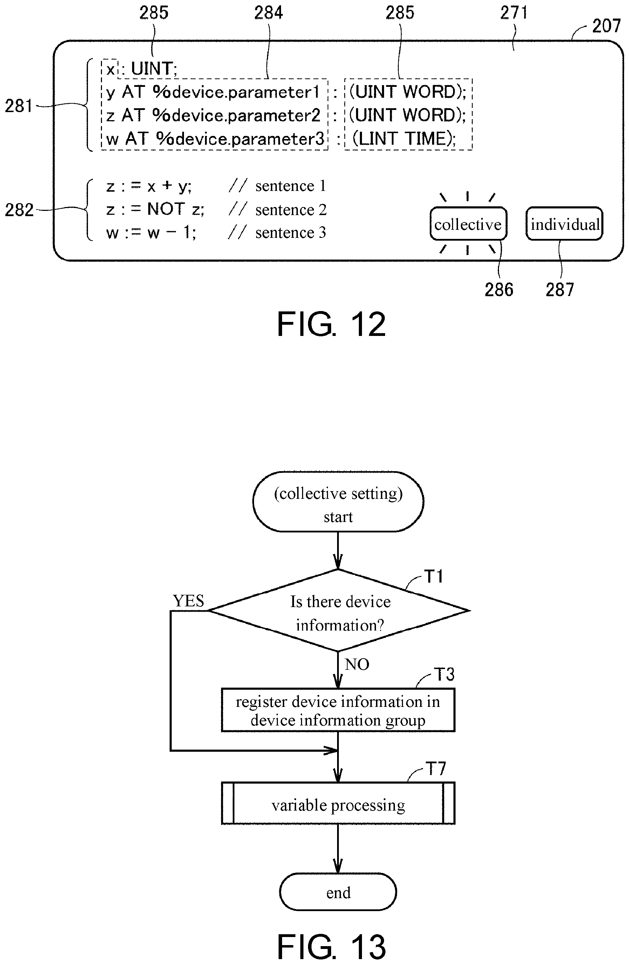

Fig. 12 is a diagram illustrating an example of a screen on which the program according to the embodiment is displayed. In the embodiment, in a case in which the user describes the code section 282, the user describes a command code using a variable name declared (described) in the variable declaration section 281. The screen of the monitor 207 in Fig. 12 includes a button 286 operated to activate the collective setting processing and a button 287 operated to activate the individual setting processing.

### (f1. Collective Setting Processing)

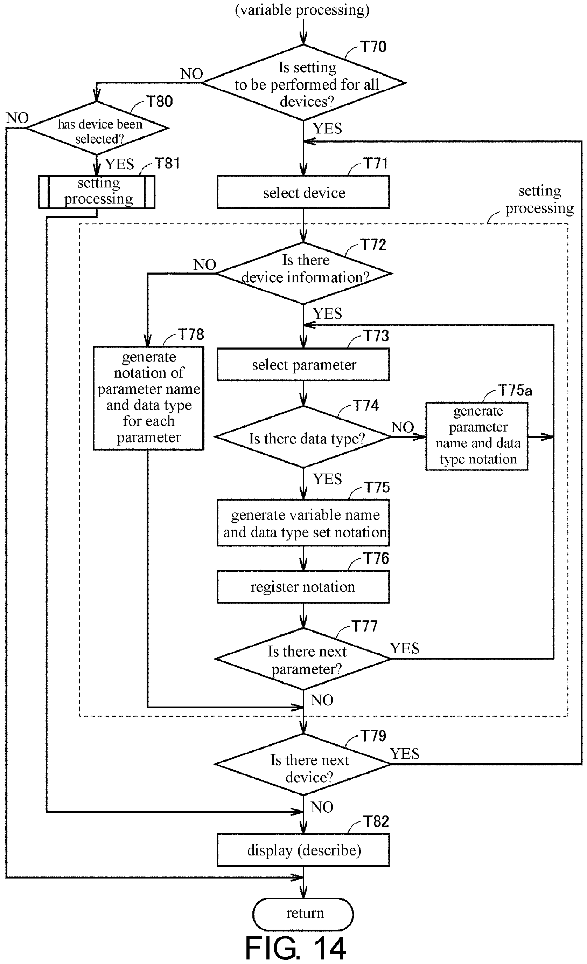

Fig. 13 is a processing flowchart illustrating an overview of an example of the collective setting processing according to the embodiment. Fig. 14 is a flowchart illustrating an example of variable processing according to the embodiment. Processing that follows the flowcharts in Figs. 13 and 14 is performed in the editing processing (Step S1) in Fig. 7. In the editing processing, the editor 252 causes the monitor 207 to display a program that is being edited as illustrated in Fig. 12, for example.

If the button 286 in Fig. 12 is operated, and the collective setting processing is activated, the editor information 277 in Fig. 9 can be read from the data storage section 270 and can be displayed on the monitor 207. The user determines whether or not device information corresponding to all the devices indicated by the network information 293 of the editor information 277 displayed on the monitor 207 is included in the device information group 291 (Step T1).

In a case in which such device information is not included (NO in Step T1), the user operates the keyboard 205 or the like to add device information that the device vendor provides to the existing device information group 291 (Step T3). In a case in which the device information regarding all the devices are included in the device information group 291 (YES in Step T1), the variable editor 253 performs variable processing (Step T7) of device parameters (control data).

Referring to the flowchart in Fig. 14, the variable processing will be described. In the variable processing, the variable editor 253 determines which of all devices connected to the network or a device designated by the user is to be a target of the variable processing, based on content of an operation performed with the keyboard 205 (Step T70).

If the variable editor 253 determines that the variable processing is to be performed on all the devices as targets based on the content of the user's operation via the keyboard 205 (YES in Step T70), the variable editor 253 selects one (hereinafter referred to as a device D) from among all the devices in the network information 293 (Step T71). The variable editor 253 performs setting processing (Step T72 to T78) on the selected device D.

In setting processing, the variable editor 253 searches for the device information group 291 based on an identifier of the device D. Based on the result of the searching, the variable editor 253 determines whether or not device information 29 corresponding to the device D can be acquired from the device information group 291 (Step T72). In a case in which the device information 29 can be acquired (YES in Step T72), that is, in a case in which the device information 29 of the device D is included in the device information group 291, processing (Steps T73 to T77) of setting a variable name and a data type is performed on each of parameter names (param1, param2, ...) included in the device information 29 of the acquired device D.

Specifically, one parameter (hereinafter referred to as a parameter p) is selected from the device information 29 of the device D first (Step T73). An identifier and a data type (hereinafter referred to as a data type τ) of the vendor (hereinafter referred to as a vendor V) corresponding to the parameter p are specified from the device information 29. Then, a record 290 of the vendor V is searched for in the correspondence information 294, and whether or not there are data types associated with the data type τ in the similar data type group 298 of the record 290 is determined based on the result of the searching (Step T74). In other words, whether or not there are other data types that can be equated with the data type τ is determined.

If the variable editor 253 determines that there are no other data types that can be equated (NO in Step T74), notation data using the parameter name and the data type τ of the parameter p is registered in the variable editor information 292 (Step T75a). In this manner, a notation 2922, a notation 2924, or the like in Fig. 9, for example, is registered in the variable editor information 292.

On the other hand, if the variable editor 253 determines that there are other data types that can be equated (YES in Step T74), the variable editor 253 generates a data type set notation in which the parameter name of the parameter p, the data type τ, and the data types of the similar data type group 298 (that is, other data types that can be equated) are linked to each other (Step T75) and registers the generated data type set notation in the variable editor information 292 (Step T76). In this manner, the notation 2921, the notation 2923, or the like in Fig. 9, for example, is registered in the variable editor information 292.

The variable editor 253 searches for the device information 29 of the device D and determines whether or not there are parameters (unprocessed parameters p) indicated by the next parameter data 243 based on the result of the searching (Step T77). If the variable editor 253 determines that are next parameters p (YES in Step T77), the variable editor 253 returns to Step T73 and performs the processing in and after Step T74 on the next parameters p similarly to the aforementioned manner.

On the other hand, if the variable editor 253 determines that there are no next parameters p (NO in Step T77), that is, in a case in which registration of the notations for all the parameters p included in the device information 29 of the device D in the variable editor information 292 has been completed, the processing moves on to Step T79.

In Step T79, the variable editor 253 searches for the device information group 291 and determines whether or not there is next device information 29 (the device information 29 on which the setting processing has not yet been performed) based on the result of the searching (Step T79). If the variable editor 253 determines that there is next device information 29 (YES in Step T79), the variable editor 253 returns to Step S71 and performs the setting processing in and after Step T72 on the next device information 29 similarly to the aforementioned manner.

If the variable editor 253 determines that there is no next device information 29 (the device information 29 on which the setting processing has not yet been performed) in Step T79 (NO in Step T79), that is, if the variable editor 253 determines that the setting processing has been performed on all the pieces of device information 29 in the device information group 291, the variable editor 253 describes content of the variable editor information 292 in the variable declaration section 281 of the source program 271 of the data storage section 270 (Step T82). The source program 271 including the description of the variable declaration section 281 in this manner is displayed on the monitor 207 as illustrated in Fig. 12, for example.

On the other hand, if the variable editor 253 determines that there is no device information 29 of the device D in the device information group 291 (NO in Step T72), the variable editor 253 extracts the parameter name (param1, param2, ...) of the parameters p of the device D and the data type τ corresponding to each parameter name from the network information 293, generates notation data using the parameter name and the data type τ for each parameter p, and registers the generated notation data in the variable editor information 292 (Step T78). In this manner, the notation 2922, the notation 2924, or the like in Fig. 9, for example, is registered in the variable editor information 292. Thereafter, the processing proceeds to Step T79.

If the variable editor 253 determines that the variable processing is to be performed on the device selected by the user as a target based on content of a user's operation performed via the keyboard 205 (NO in Step T70 and YES in T80), the variable editor 253 performs the setting processing (Steps T72 to T78) described above on the device selected by the user (Step T81). Thereafter, the variable editor 253 performs the processing in Step T82 similarly to the aforementioned manner. On the other hand, in a case in which the variable editor 253 does not determine that the variable processing is to be performed on the device selected by the user as a target (NO in Step T70 and NO in T80), the variable editor 253 returns to the original processing in Fig. 13.

According to the variable processing in Fig. 14 as described above, the variable 284 set in the setting processing and the data type 285 of control data to which each variable 284 is allocated are described in the variable declaration section 281 of the source program 271, for example. In the embodiment, the variable editor 253 generates each variable 284 in a uniquely identifiable manner in accordance with a predefined rule.

### (f2. Individual Setting Processing)

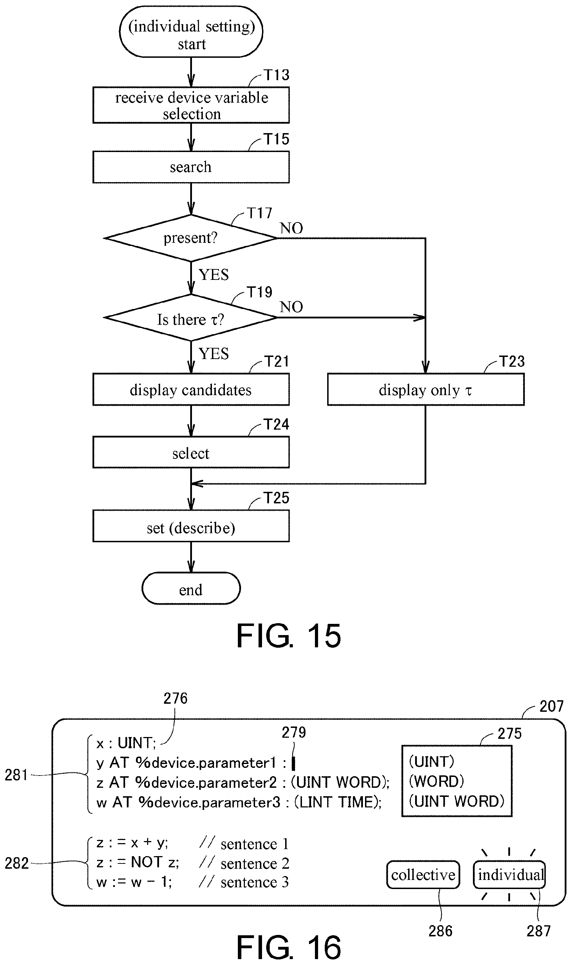

Fig. 15 is a processing flowchart illustrating an example of the individual setting processing according to the embodiment. Fig. 16 is a diagram illustrating a display example of data type candidates in the individual setting processing according to the embodiment. In the individual setting processing, the variable editor 253 sets (describes) a data type selected by user from among one or more data types (candidates) in a parameter (variable) of the variable declaration section 281. Referring to Fig. 15, processing of setting a data type for a parameter (variable) of a certain device will be described.

The user selects a data type τ of a variable v of the device D through an operation of the keyboard 205. The variable editor 253 receives such an operation of selecting the data type τ of the variable v (Step T13).

The variable editor 253 searches for the device information group 291 based on content of the received operation (StepT15). The variable editor 253 determines whether or not the vendor identifier 242 corresponding to the variable v is in the device information group 291 from the result of the searching (Step T17). If it is determined that the vendor identifier 242 is not included in the device information group 291 (NO in Step T17), the variable editor 253 displays only the data type τ as a candidate of the data type of the variable v in the variable declaration section 281 on the monitor 207 (Step T23).

On the other hand, if the variable editor 253 determines that the vendor identifier 242 corresponding to the variable v is included in the device information group 291 from the result of the searching (YES in Step T17), the variable editor 253 determines whether or not the data type τ received from the user is included in the data type 297 corresponding to the vendor information 295 that conforms to the vendor identifier 242 from the correspondence information 294 (Step T19). In a case in which the variable editor 253 determines that there is no data type τ in the data type 297 (NO in Step T19), the variable editor 253 displays only the data type τ as a candidate 276 of the data type of the variable v (Step T23). Thereafter the processing proceeds to Step T25.

Also, in a case in which the variable editor 253 determines that the data type τ is included in the data type 297 (YES in Step T19), the variable editor 253 displays each one of data types that are included in the similar data type group 298 corresponding to the data type τ of the data type 297 and that can be equated and a data type set notation in which the data types are linked to each other as candidates 275 in the variable declaration section 281 on the monitor 207 (Step T21). A display example of the candidates 276 and 275 in Steps T23 and T21 are illustrated in Fig. 16.

In a case in which the data type τ received from the user indicates UINT, for example, the variable editor 253 displays only the data type τ (that is, UINT) received from the user as the candidate 276 in Fig. 16 in Step T23. On the other hand, the variable editor 253 displays the candidate 275 in relation to a prompt 279 while displaying the prompt 279 at a position on the monitor 207 at which the user's selecting operation has been received, in Step T21. The candidate 275 includes three candidates, namely each one (for example, UINT and WORD) of the data types that can be equated with the data type τ (that is, UINT) received from the user and a data type set notation (for example, UINT WORD) in which these data types are linked to each other.

The user operates the keyboard 205 and selects one of the three candidates in the candidate 275 displayed on the monitor 207. The variable editor 253 displays the data type selected based on the user's selecting operation at the position of the prompt 279 (Step T24).

The variable editor 253 describes the data type displayed in Step T24 or Step T23 in the variable declaration section 281 of the source program 271 in the data storage section 270 (Step T25).

In this manner, in the individual setting processing according to the embodiment, the variable editor 253 presents one or more data types (candidates) based on the correspondence information 294 via the monitor 207 as information for supporting a user's operation of setting the data type corresponding to the parameter (variable) of the variable declaration section 281.

### <G. Compiling Processing>

Figs. 17 and 18 are flowcharts illustrating an example of compiling processing according to the embodiment. The compiler 254 compiles the source program 271 (more specifically, the source code 272) edited in the editing processing. Although the compiling processing includes detection of a syntax error and the like of the source program 271, determination of the data type of the control data described in the code section 282, and the like, determination of a data type will be mainly described in this embodiment since a method in the related can be used for detecting a syntax error and the like.

Referring to (A) of Fig. 17, the lexical analysis section 212 and the syntactic analysis section 213 converts the source program 271 into a data structure suitable for compiling in the compiling processing. As the data structure, an abstract syntax tree (AST) is used, for example. Specifically, the lexical analysis section 212 analyzes the source program 271 while scanning the source program 271, sorts the source program 271 into a plurality of tokens including identifiers of variables or the like based on the result of the analysis, and outputs a token sequence including the sorted tokens. The syntactic analysis section 213 analyzes the token sequence from the lexical analysis section 212 and generates an AST based on the result of the analysis (Step S21). In semantic analysis processing, the semantic analysis section 214 determines a type of data or a type of an expression including a command code such that the source code 272 is adapted for the program language description specification, based on the AST output by the syntactic analysis section 213 (Step S23). The relocatable code generation section 216 converts the source code 272 of the source program 271 into a relocatable code similarly to the related art based on information of the data type of the expression obtained through the semantic analysis (Step S25). The compiler 254 stores the relocatable code generated by the relocatable code generation section 216 as an executable program 273 in the data storage section 270. Thereafter, the processing returns to the original processing in Fig. 7. The relocatable code corresponds to the executable program 273.

Referring to (B) of Fig. 17, the semantic analysis processing (Step S23) includes symbol solving processing (Step S31) and code analysis processing (Step S32). In the symbol solving processing, the semantic analysis section 214 registers the variable 284 declared in the variable declaration section 281 in a symbol table of the data storage section 270, which is not illustrated, and replaces the identifier (variable) described in the code section 282 with a symbol using the symbol table.

In the code analysis processing (Step S32), the code analysis section 215 analyzes an AST expressing each expression described in the code section 282 and determines a data type of the expression based on the result of the analysis. Here, the AST of the entire source program 271 includes partial AST corresponding to each expression described in the code section 282.

Referring to Fig. 18, the code analysis section 215 determines whether or not analysis processing has been performed on the ASTs corresponding to all the expressions included in the ASTs of the source program 271 (Step S41). If it is determined that the ASTs corresponding to all the expressions have been analyzed (YES in Step S41), the code analysis processing ends, and the processing returns to the original processing in (B) of Fig. 17.

If it is determined that there are ASTs corresponding to unanalyzed expressions (NO in Step S41), the code analysis section 215 extracts an AST corresponding to a next expression that has not yet been analyzed from the ASTs of the source program 271 (Step S42). The code analysis section 215 analyzes the extracted AST and determines a data type of the expression based on the result of the analysis (Step S43). Thereafter, the processing returns to Step S41.

### (g1. Expression Type Analysis Processing)

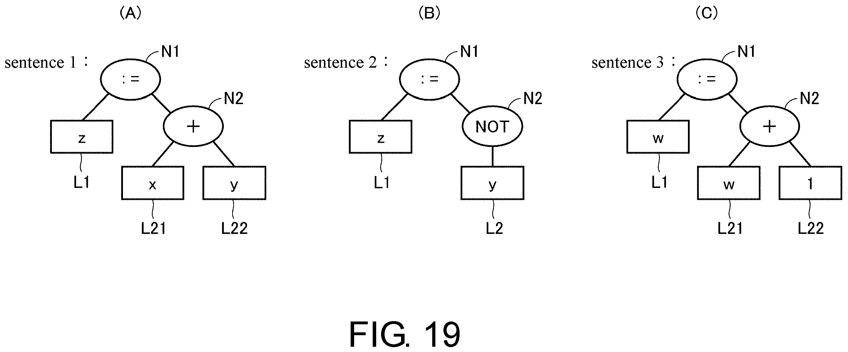

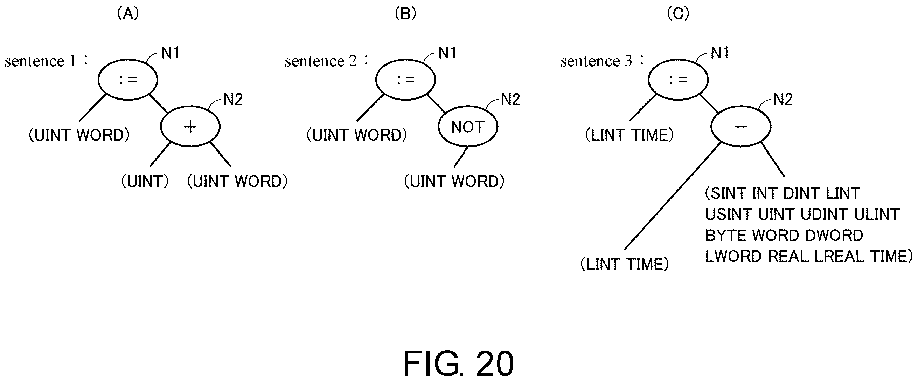

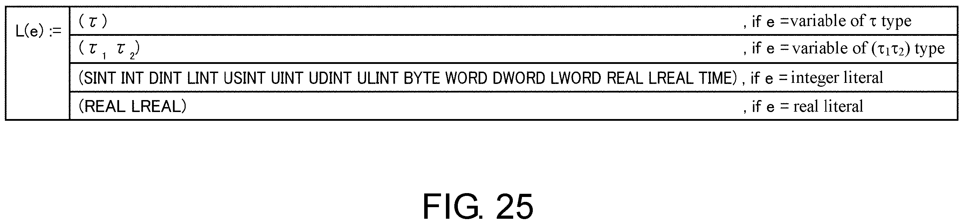

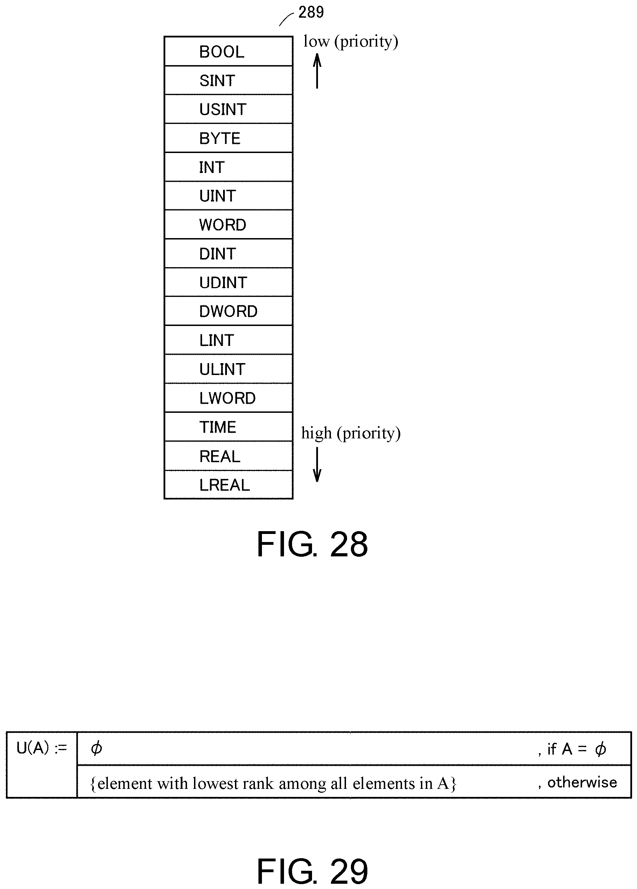

Processing of determining a type of an expression performed by the code analysis section 215 (Step S43) will be described. The code analysis section 215 determines which of data types is to be used to perform an arithmetic operation for operation expressions of a sentence 1, a sentence 2, and a sentence 3 included in the source program 271, for example. Fig. 19 is a diagram illustrating an example of ASTs corresponding to the expressions according to the embodiment. Figs. 20 to 24 are diagrams illustrating an example of changes in ASTs in the code analysis processing according to the embodiment. Figs. 25, 26, 27, and 29 are diagrams illustrating an example of functions applied to the code analysis processing according to the embodiment. Fig. 28 is a diagram illustrating an example of the rank table 289 according to the embodiment. The rule 278 including the functions in Figs. 25, 26, 27, and 29 and the rank table 289 in Fig. 28 are stored in the data storage section 270.

### (g1-1. AST Structure)

(A) of Fig. 19, (B) of Fig. 19, and (C) of Fig. 19 illustrate ASTs corresponding to the expressions of the sentence 1, the sentence 2, and the sentence 3 included in the source program 271. For example, the sentences 1 to 3 represent operational expressions, in each of which a result (value) of an operational expression on the right side is inserted into a variable (operand) on the left side, using an operator (:=) inserted as an operator. Although a unary arithmetic operation of the sentence 2 or the binary arithmetic operation of the sentence 1 and the sentence 3 is illustrated for simple explanation, the operational expressions are not limited thereto.

The AST corresponding to each of expressions of the sentence 1, the sentence 2, and the sentence 3 has a hierarchical structure. The hierarchical structure includes a node N1 to which the operator (:=) is allocated, a node N2 to which the operator included in the right side thereof is allocated, and a leaf to which the variable that is an operand connected to the nodes is allocated. In the hierarchical structure, the node N1 to which the operator (:=) is allocated is also referred to as a root node N1, a node (for example, the node N2) of a lower layer (next order) or the leaf L1 is connected to the root node N1, and leaves L2, L21, L22, and the like are connected to the node N2. The code analysis section 215 performs processing from the lower layer toward the higher layer in a case in which the code analysis section 215 processes the AST.

### (g1-2. Calculation of Leaf Type Set)

First, the code analysis section 215 calculates a type set corresponding to all leaves using an L function in Fig. 25 for each of ASTs corresponding to the expressions of the sections 1 to 3. In the embodiment, the type set indicates a mathematical group of data types including data types as elements. Referring to Fig. 25, the L function is defined as returning a type set of data types that the leaves can take by assuming each of the leaves of the ASTs corresponding to the expression as an argument. Thus, the code analysis section 215 generates the ASTs in (A) of Fig. 20, (B) of Fig. 20, and (C) of Fig. 20 by calculating the type set of each leaf using the L function for each of the ASTs corresponding to the expressions of the sentences 1 to 3 in (A) of Fig. 19, (B) of Fig. 19, and (C) of Fig. 19. The ASTs in (A) of Fig. 20, (B) of Fig. 20, and (C) of Fig. 20 are obtained by replacing the leaves of the ASTs in (A) of Fig. 19, (B) of Fig. 19, and (C) of Fig. 19 with the type set of the leaves.

### (g1-3. Calculation of Node Type Set)

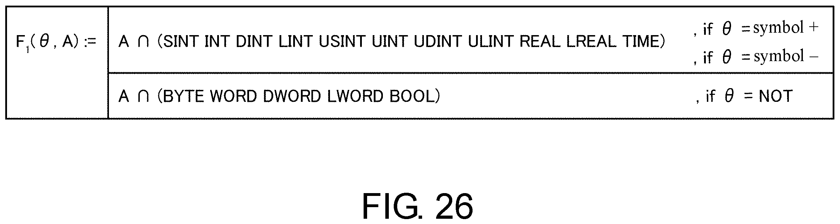

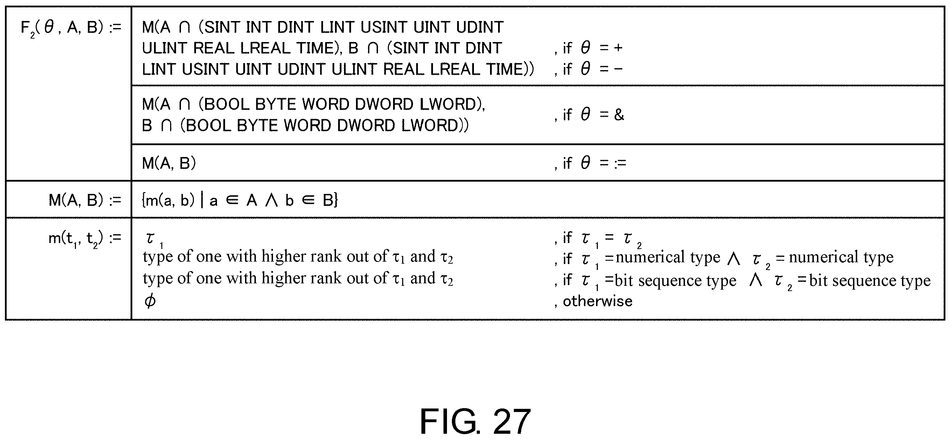

The code analysis section 215 calculates a type set corresponding to one operator of the ASTs in (A) of Fig. 20, (B) of Fig. 20, and (C) of Fig. 20 and an operand that accompanies the operator by applying the F₁ function in Fig. 26 or the F₂ function in Fig.27. The code analysis section 215 performs this operation on all the operators of the ASTs corresponding to the expression in (A) of Fig. 20, (B) of Fig. 20, and (C) of Fig. 20. In a case in which the expressions corresponding to the ASTs includes a plurality of operators, the code analysis section 215 applies the operation to each of the operators in accordance with a priority order of the operators defined by the predefined program language specification.

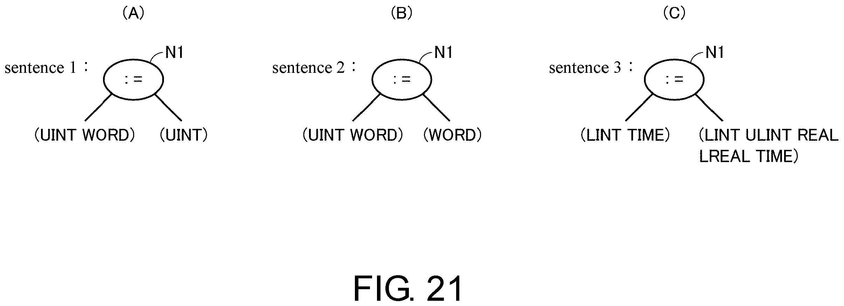

The F₁ function in Fig. 26 denotes a function applied in a case in which an operator is a unary operator. The F₁ function is defined as returning a type set including only data types that the unary operator can take as elements by assuming a type set (A) of a unary operator (θ) and a leaf (operand) connected to a node of the operator as argument. The operator of the node N2 of the lower layer of the sentence 2 in (B) of Fig. 20 is a unary operator. Thus, the code analysis section 215 calculates a type set including only the data types that the unary operator can take as elements using the F₁ function for the unary operator of the node N2 of the AST corresponding to the expression of the sentence 2 in (B) of Fig. 20. Specifically, the code analysis section 215 sets "NOT" for the unary operator (θ) and "UINT WORD" for the type set (A) as arguments in the F₁ function and executing the F₁ function in a case in which the unary operator of the node N2 in (B) of Fig. 20 is processed. In this manner, the type set (WORD) of the node N2 is acquired as in (B) of Fig. 21 as an operational result of the F₁ function as illustrated in Fig. 26.

The F₂ function in Fig. 27 is a function applied in a case in which an operator is a binary operator. The function is defined as returning a type set including only data types that the binary operator can take for operands as elements by assuming the type set (A) of the binary operator (θ) and the operand of the leaf connected to the left of the node of the binary operator (that is, the left operand) and the type set (B) of the operand connected to the right of the node of the binary operator (that is, the right operand) as arguments.

When the F₂ function is executed, the rank table 289 in Fig. 28 is referred to. The rank table 289 defines the rank of the plurality of data types that can be described in accordance with the predefined program description language specification. The rank table 289 in Fig. 28 represents ranking information in accordance with priorities indicating degrees with which the plurality of data types are set as data types of the variable with higher priorities than other data types, based on the criterion based on the 'data handling method". Although the aforementioned criterion for determining the priorities is data sizes that the data types can take, for example, in the embodiment, the criterion is not limited to the data sizes.

In the sentence 1 in (A) of Fig. 20 and the sentence 3 in (C) of Fig. 20, both the operators of the nodes N2 of the lower layers are binary operators. Thus, the code analysis section 215 calculates a type set including only the data types that the binary operator can take as elements using the F₂ function for the binary operators of the nodes N2 of the ASTs in (A) of Fig. 20 and (C) of Fig. 20.

Specifically, in a case in which the binary operator of the node N2 in (A) of Fig. 20 is processed, the code analysis section 215 sets "+" for the binary operator (θ), "UINT" for the type set (A), and "UINT WORD" for the type set (B) as arguments for the F₂ function and executes the F₂ function. In this manner, the type set (UINT) is calculated from the type set (A) and the type set (B) based on the binary operator (θ) as an intermediate value M(A, B) of the operational result of the F₂ function as illustrated in Fig. 27. Since the type set of the intermediate value M(A, B) includes only one type, it is not necessary to apply the rank table 289 in Fig. 28. Therefore, the type set of the intermediate value M(A, B) is the type set (UINT) of the final operational result of the F₂ function. In this manner, the type set (UINT) of the node N2 is acquired as in (A) of Fig. 21 by executing the F₂ function.

Also, in a case in which the binary operator of the node N2 in (C) of Fig. 20 is processed, the code analysis section 215 sets "-" for the binary operator (θ), "LINT TIME" for the type set (A), and "SINT INT DINT LINT USINT UINT UDINT ULINT BYTE WOD DWORD LWORD REAL LREAL TIME" for the type set (B) as arguments for the F₂ function and executes the F₂ function. In this manner, the type set (LINT TIME SINT INT DINT USINT UINT UDINT ULINT BYTE WORD DWORD LWORD REAR LREAL TIME LINT ULINT REAL LREAL) is calculated from the type set (A) and the type set (B) based on the binary operator (θ) as the intermediate value M(A, B) of the operational result of the F₂ function as illustrated in Fig. 27. Since the type set of the intermediate value M(A, B) includes a plurality of types, the rank table 289 in Fig. 28 is applied to the intermediate value M(A, B), and data types with higher priorities are selected. In this manner, the type set (LINT ULINT REAL LREAL TIME) of the final operational result of the F₂ function is acquired as a type set of the node N2 as in (C) of Fig. 21.

By applying the F₂ function in this manner, the data type of the operand of the binary operator is determined to be the data type with a higher priority in the rank table 289 in Fig. 28. In a case in which the priorities are based on the data sizes, the data type set for the operand of the binary operator is determined to be a data type that can handle a larger data size. In this manner, in a case in which the arithmetic operation using the binary operator is executed by the PLC when the program is executed, for example, it is possible to avoid an information loss (information dropping) such as digit cancellation and digit overflow in the operational result or a result obtained in the process of the arithmetic operation due to the fact that the data size such as an effective digit that the data type set for the operand has is small.

The code analysis section 215 calculates a type set of the node N2 of the lower layer as described above. In this manner, the ASTs in (A) of Fig. 20, (B) of Fig. 20, and (C) of Fig. 20 are converted into the ASTs in (A) of Fig. 21, (B) of Fig. 21, and (C) of Fig. 21.

Next, the type set of the node N1 of the higher layer is calculated using the F₁ function or the F₂ function similarly to the node N2. All the operators of the node N1 in (A) of Fig. 21, (B) of Fig. 21, and (C) of Fig. 21 are binary operators (:=). Thus, the code analysis section 215 calculates the type set including only the data types that the binary operators can take as elements using the F₂ function for the binary operators of the nodes N1 of the ASTs in (A) of Fig. 21, (B) of Fig. 21, and (C) of Fig. 21.

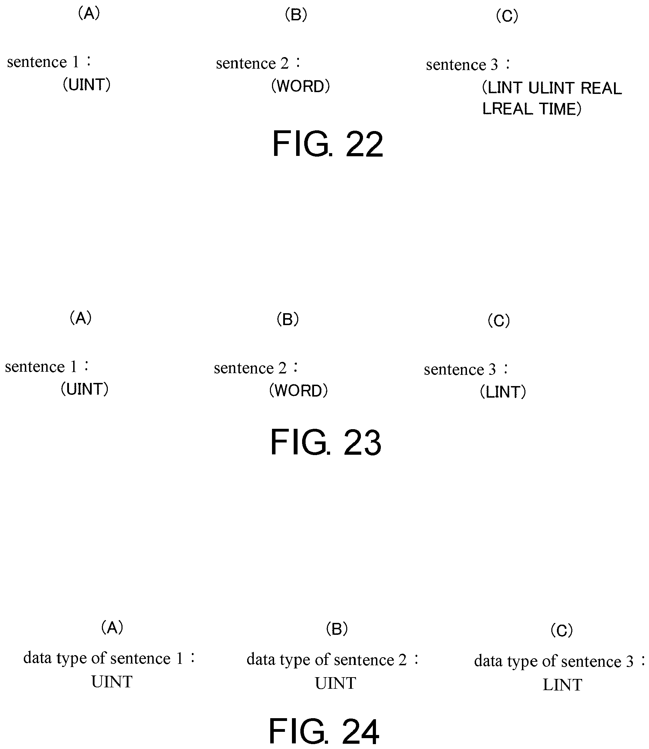

Specifically, in a case in which the binary operators of the node N1 of the ASTs in (A) of Fig, 21, (B) of Fig, 21, and (C) of Fig. 21 are processed, the code analysis section 215 sets ":=" for the binary operator (θ), the type set of the left operand of the node N1 for the type set (A), and the type set of the right operand of the node N1 for the type set (B) as arguments for the F₂ function, and executes the F₂ function. In this manner, the type set (UINT) is acquired as in (A) of Fig. 22 in the case of the node N1 in (A) of Fig. 21, and the type set (UINT) is acquired as in (B) of Fig. 22 in the case of the node N1 in (B) of Fig. 21. In the case of the node N1 in (C) of Fig. 21, the type set (LINT ULINT REAL LREAL TIME) is acquired as in (C) of Fig. 22.

The code analysis section 215 calculates the type set of the node N1 as described above. The ASTs in (A) of Fig. 21, (B) of Fig. 21, and (C) of Fig. 21 are converted into type sets in (A) of Fig. 22, (B) of Fig. 22, and (C) of Fig. 22.

### (g1-4. Determination of Expression Type)

The code analysis section 215 acquires a new type set from a type set finally acquired for the AST corresponding to each of the expressions represented in (A) of Fig. 22, (B) of Fig. 22, and (C) of Fig. 22 by executing the U function in Fig. 29. The U function in Fig. 29 is defined as returning a type set including only one element (data type) from among the type sets of arguments by assuming the type set (A) in (A) of Fig. 22, (B) of Fig. 22, and (C) of Fig. 22 as an argument. Referring to Fig. 29, the U function returns an empty set if the type set (A) of the argument is the empty set when executed. If the type set (A) of the argument is not an empty set, the U function returns a data set corresponding to the lowest rank (priority) based on the priorities defined in the rank table 280 in Fig. 28 from among the data types included in the type set (A). In this manner, the code analysis section 215 converts the ASTs in (A) of Fig. 22, (B) of Fig. 22, and (C) of Fig. 22 into the type sets in (A) of Fig. 23, (B) of Fig. 23, and (C) of Fig. 23.

By applying the U function in this manner, the expression type (that is, the data type of the operand in the left side of the expression) is determined to be the data type with a lower priority in the rank defined in Fig. 28. In this manner, in a case in which the variables of the operands indicating the calculated values of the expressions of the sentences 1 to 3 are used as operands in another expression of the source program 271, and when the code analysis section 215 executes the L function or the F₁ function and the F₂ function on ASTs of this another expression, it is possible to secure the possibility that a type set including data types with higher priorities than the data types of the variables of the operands can be acquired.

The code analysis section 215 converts the type sets of the ASTs in (A) of Fig. 23, (B) in Fig. 23, and (C) of Fig. 23 acquired through the execution of the U function into data types of the expressions corresponding to the sentences 1 to 3 in (A) of Fig. 24, (B) of Fig. 24, and (C) of Fig. 24. Specifically, if each of the type sets of the ASTs in (A) of Fig. 23, (B) of Fig. 23, and (C) of Fig. 23 includes a single element, the code analysis section 215 determines the element as a data type of the corresponding expression for the AST. Otherwise (if the type set is an empty set), the code analysis section 215 ends the processing by assuming it as an error of a non-compliant type.

According to the embodiment, the variable editor 253 defines one or more data type candidates that can be equated for each control datum (variable) of the device based on the data type correspondence information 294 for each data vendor in the variable declaration section 281 when the source program 271 is edited. When the source program 271 is compiled after the editing, the compiler 254 determines, for each expression in the source program 271, a data type of the expression to secure operational precision in accordance with the predefined rule (the L function, the F₁ function, the F₂ function, and the U function) and the rank table 289 in Fig. 28 from the one or more data type candidates defined for the variable of the expression. In this manner, even if the data types that can be supported differ depending on the devices included in the PLC system SYS, the editor 252 and the compiler 254 can provide a function of supporting a programmer to declare an appropriate data type in programming and an environment of supporting generation of an executable code with which an error (an information loss such as digit cancellation or digit overflow) occurring when the program is executed can be avoided.

### <H. Program of Editor and Compiler>

In the embodiment, the editor 252 and the compiler 254 may execute the aforementioned processing by the CPU 201 in the support device 200 executing a necessary program. The program may be stored in a storage unit such as an HDD 204. When the CPU 201 executes the necessary program, the target program stored in the storage unit is developed on the RAM 203. Then, the CPU 201 implements the processing of the components, such as the variable editor 253, the lexical analysis section 212, the syntactic analysis section 213, the semantic analysis section 214, the code analysis section 215, and the relocatable code generation section 216 in the editor 252 and the compiler 254 by interpreting and executing the program developed on the RAM 203.

The CPU 201 controls the components of the support device 200 in accordance with information processing. The aforementioned storage unit is not limited to the HDD 204, for example, and can include an auxiliary storage device such as a solid state drive. Such a storage unit can store the program and the data such as a rule 278 and editor information 277.

The program or the data can be provided to the support device 200 via a storage medium. Such a storage medium is a medium that accumulates information regarding the program and the like using an electrical, magnetic, optical, mechanical, or chemical actions such that a computer, other devices, a machine, or the like can read the recorded information such as a program. In the embodiment, such a storage medium includes, for example, a CD-ROM 300. Also, the support device 200 can also receive such a program and/or data from an external device via a communication network.

The embodiment as described above includes the following technical ideas.
[Configuration 1]
   A support device (200) that generates an executable program (273) to be executed by a control device (PLC 1 to PLC 3) that controls a target (6, 7), the support device (200) including:
   data storing means (270) for storing, for each data type for controlling the target, information (294) regarding a plurality of data types including the data type and other data types that are able to be handled by the same data handling method as the data type by the control device when the program is executed;
   means (253) for generating information (281) that defines a variable for each datum and one or more of the plurality of data types that are data types corresponding to the variable;
   means (252) for generating a command code (282) that describes processing to be executed by the control device using the defined variable; and
   means (215, 216) for generating the executable program using the defining information and the command code,
   wherein the means for generating the executable program is configured to
      generate a type set including one or more data types defined to correspond to each variable included in an operational expression indicated by the command code, and
      select one data type from the type set of the operational expression based on a criterion for securing operational precision and determine the data type as a data type of an operational result.
[Configuration 2]
   The support device according to Configuration 1,
   in which the plurality of data types depending on each of the data types for controlling the target are stored for each vendor of the target, and
   the plurality of data types of each vendor includes a data type (297) defined in advance by the vendor and other data types (298) that are able to be handled by the same data handling method as the data type defined in advance.
[Configuration 3]
   The support device according to Configuration 1 or 2, in which the means for generating the defining information is configured to generate the variable for each datum and information defining the plurality of data types corresponding to the vendor of the target as the data types corresponding to the variable.
[Configuration 4]
   The support device according to Configuration 3, in which the support device receives, from the control device, information identifying a vendor of the target connected to the control device.
[Configuration 5]
   The support device according to any one of Configurations 1 to 4, in which the means for generating the defining information is configured to
   define one or more data types corresponding to the variable for each datum based on a user's operation, and
   cause a monitor (207) to display the variable and the plurality of data types in association with the variable.
[Configuration 6]
   The support device according to any one of Configurations 1 to 5,
   in which the handling method depending on the data type includes a handling method based on how large a data size is,
   the support device further includes: means (289) for storing, in correspondence with each data type, a priority indicating a degree with which the data type is set to correspond to the variable with a higher priority than the other data types based on the handled data size, and
   the determining of the data type of the operational result includes selecting a data type with a priority in accordance with the criterion for securing the operational precision from the type set and determining the data type as the data type of the operational result.
[Configuration 7]
   The support device according to any one of Configurations 1 to 6, in which the generating of the type set includes generating, based on a type of an operator included in the operational expression, a type set including one or more data types defined to correspond to a variable included in the expression.
[Configuration 8]
   A support program that generates an executable program (273) to be executed by a control device (PLC 1 to PLC 3) that controls a target (6. 7), the support program causing a computer to function as the following means,
   wherein the computer includes
   data storing means (270) for storing, for each data type for controlling the target, information (294) regarding a plurality of data types including the data type and other data types that are able to be handled by the same data handling method as the data type by the control device when the program is executed;
   the following means includes
      means (253) for generating information (281) that defines a variable for each datum and one or more of the plurality of data types that are data types corresponding to the variable;
      means (252) for generating a command code (282) that describes processing to be executed by the control device using the defined variable; and
      means (215, 216) for generating the executable program using the defining information and the command code and
   the means for generating the executable program is configured to
      generate a type set including one or more data types defined to correspond to each variable included in an operational expression indicated by the command code, and
      select one data type from the type set of the operational expression based on a criterion for securing operational precision and determine the data type as a data type of an operational result.

The embodiment disclosed herein should be considered as being provided for an illustrative purpose in every respect and not for a limiting purpose. The scope of the present invention is described by the claims rather than the above description and is intended to include all modifications within a sense and scope equivalent to the claims.

### [Reference Signs List]

6 Detection sensor
7 Actuator
200 Support device
300 CD-ROM
202 ROM
203 RAM
205 Keyboard
206 Mouse
207 Monitor
211 Transfer module
212 Lexical analysis section
213 Syntactic analysis section
214 Semantic analysis section
215 Code analysis section
216 Relocatable code generation section
241 Device identifier
242 Vendor identifier
243 Parameter data
250 Programming application
252 Editor
253 Variable editor
254 Compiler
270 Data storage section
271 Source program
272 Source code
273 Executable program
277 Editor information
278 Rule
279 Prompt
280 Network setting application
281 Variable declaration section
282 Code section
283 Comment section
284, v Variable
285, 297 Data type
286, 287 Button
289 Rank table
290 Record
291 Device information group
292 Variable editor information
293 Network information
294 Correspondence information
295 Vendor information
296 Data type group that can be equated
298 Similar data type group
1061 Configuration information
L1, L2, L21, L22 Leaf
N1, N2 Node
NW Network
SYS PLC system
V Vendor
p Parameter

## Claims

1. A support device that generates an executable program to be executed by a control device that controls a target, the support device comprising:
data storing means for storing, for each data type for controlling the target, information regarding a plurality of data types including the data type and other data types that are able to be handled by the same data handling method as the data type by the control device when the program is executed;
means for generating information that defines a variable for each datum and one or more of the plurality of data types that are data types corresponding to the variable;
means for generating a command code that describes processing to be executed by the control device using the defined variable; and
means for generating the executable program using the defining information and the command code,
wherein the means for generating the executable program is configured to
generate a type set including one or more data types defined to correspond to each variable included in an operational expression indicated by the command code, and
select one data type from the type set of the operational expression based on a criterion for securing operational precision and determine the data type as a data type of an operational result.

2. The support device according to claim 1,
wherein the plurality of data types for each of the data types for controlling the target is stored for each vendor of the target, and
the plurality of data types of each vendor includes a data type defined in advance by the vendor and other data types that are able to be handled by the same data handling method as the data type defined in advance.

3. The support device according to claim 1 or 2, wherein the means for generating the defining information is configured to generate information that defines the variable for each datum and the plurality of data types corresponding to the vendor of the target as the data types corresponding to the variable.

4. The support device according to claim 3, wherein the support device receives, from the control device, information identifying a vendor of the target connected to the control device.

5. The support device according to any one of claims 1 to 4, wherein the means for generating the defining information is configured to
define one or more data types corresponding to the variable for each datum based on a user's operation, and
cause a monitor to display the variable and the plurality of data types in association with the variable.

6. The support device according to any one of claims 1 to 5,
wherein the handling method for the data type includes a handling method based on a data size,
the support device further comprises: means for storing, in correspondence with each data type, a priority indicating a degree with which the data type is set to correspond to the variable with a higher priority than the other data types based on the data size to be handled, and
determining the data type of the operational result includes selecting a data type with a priority in accordance with the criterion for securing the operational precision from the type set and determining the data type as the data type of the operational result.

7. The support device according to any one of claims 1 to 6, wherein generating the type set includes generating, based on a type of an operator included in the operational expression, a type set including one or more data types defined to correspond to a variable included in the expression.

8. A support program that generates an executable program to be executed by a control device that controls a target, the support program causing a computer to function as the following means,
wherein the computer includes
data storing means for storing, for each data type for controlling the target, information regarding a plurality of data types including the data type and other data types that are able to be handled by the same data handling method as the data type by the control device when the program is executed;
the following means includes
means for generating information that defines a variable for each datum and one or more of the plurality of data types that are data types corresponding to the variable;
means for generating a command code that describes processing to be executed by the control device using the defined variable; and
means for generating the executable program using the defining information and the command code, and
the means for generating the executable program is configured to
generate a type set including one or more data types defined to correspond to each variable included in an operational expression indicated by the command code, and
select one data type from the type set of the operational expression based on a criterion for securing operational precision and determine the data type as a data type of an operational result.
